# EUROPEAN PATENT APPLICATION

(11) **EP 4 478 502 A1**
(43) Date of publication of application: **18.12.2024**
(21) Application number: 22961811.1
(22) Date of filing: 14.10.2022
(51) Int. Cl.: H01M 50/204, H01M 50/289, H01M 10/613

(54) **BATTERY AND ELECTRICAL DEVICE**

(71) Applicant: Contemporary Amperex Technology (Hong Kong) Limited, Central, Central And Western District (HK)
(72) Inventor: LIU, Ruidi, Ningde, Fujian 352100 (CN); WANG, Zengzhong, Ningde, Fujian 352100 (CN); WU, Youxin, Ningde, Fujian 352100 (CN); WANG, Peng, Ningde, Fujian 352100 (CN)
(74) Representative: Ran, Handong
(86) International application number: PCT/CN2022/125506
(87) International publication number: WO 2024/077625

(57) **Abstract**

The present application relates to the technical field of batteries, and specifically discloses a battery and an electrical device. The battery comprises a battery array formed by arranging M*N battery cells in M rows and N columns, wherein M is greater than or equal to 1, N is greater than or equal to 1, and both M and N are positive integers. Each column of battery cells in the battery array are arranged in a first direction, wherein the first direction is the length direction of the battery or the locomotion direction of an electrical device comprising the battery. Each row of battery cells in the battery array are arranged in a second direction, wherein the second direction intersects with both the first direction and a vertical plane. The maximum size of each battery cell in the second direction is D, and the maximum size of the battery array in the second direction is D1, wherein N*D/D1 ∈ [0.70, 0.99]. The value of N*D/D1 is set to be within the interval of [0.70, 0.99], so that the structure of the battery array formed by all the battery cells is more compact; and when the battery array is arranged in a battery, the internal space of the battery can be fully utilized, and the space utilization rate of the battery can be improved, thereby improving the energy density of the battery.

## Description

### TECHNICAL FIELD

The present application relates to the technical field of batteries, and in particular to a battery and an electric-consuming device.

### BACKGROUND

With the development of new energy, the new energy, as a power, is being applied in more and more fields. Due to the advantages such as high energy density, recyclable charging, safety and environmental protection, power batteries are widely used in fields such as a new energy vehicle, consumer electronics and energy storage system.

The power battery usually includes a housing and a plurality of battery cells. The battery cells are arranged inside the housing. The arrangement of the battery cells in the prior art results in the low space utilization efficiency of the battery, which is not conducive to improving the energy density of the battery.

### SUMMARY

In view of the above problem, the present application provides a battery and an electric-consuming device which can solve the problem of low space utilization efficiency of a battery in a prior art.

In a first aspect, the present application provide a battery including a battery array formed by M*N battery cell(s) arranged in M rows and N columns, M≥1, N≥1, and both M and N being positive integers;

the battery cell(s) in each row of the battery array is(are) arranged in a first direction, which is a length direction of the battery or a travelling direction of an electric-consuming device including the battery, and the battery cell(s) in each column of the battery array is(are) arranged in a second direction, which intersects with the first direction and a vertical plane;

a maximum size of the battery cell in the second direction is D, a maximum size of the battery array in the second direction being D1, and N*D/D1∈[0.70, 0.99].

According to the battery in the present application, all the battery cells form the battery array. Each column of the battery array is arranged in the first direction, and each row of the battery array is arranged in the second direction. In the second direction, the maximum size of the battery cell is D, and the maximum size of the battery array is D1. A value of N*D/D1 ranges within [0.70, 0.99], so that the structure of the battery array formed by all the battery cells can be more compact. When the battery array is arranged inside the battery, an internal space of the battery can be fully utilized, the space utilization efficiency of the battery can be improved, and the energy density of the battery can be improved.

In some embodiments of the present application, N*D/D1∈[0.83, 0.99]. In this embodiment, by further setting the value of N*D/D 1 within the range of [0.83, 0.99], the battery array can fully utilize its performance and have a more compact structure, which is conducive to improving the space utilization and energy density of the battery.

In some embodiments of the present application, the length direction of the battery is parallel to or intersects with the travelling direction of the electric-consuming device. In this embodiment, by arranging the length direction of the battery to be parallel to or intersect with the travelling direction of the electric-consuming device, the convenience of arrangement of the battery in the electric-consuming device can be improved.

In some embodiments of the present application, in the battery array, M≥2, and in each row of the battery cells, an adhesive is provided between two adjacent battery cells; and/or
in the battery array, N≥2, in each column of the battery cells, an adhesive is provided between two adjacent battery cells.

In this embodiment, the battery array is arranged in M rows and N columns. When the number of battery cells in each column is more than or equal to two, the two adjacent battery cells in each column can be connected and fixed by the adhesive. When the number of battery cells in each row is more than or equal to two, the two adjacent battery cells in each row can be connected and fixed by the adhesive. By using the adhesive to connect and fix the two adjacent battery cells, the structure of the battery array is simple and easy to be achieved during assembly, which can accelerate the production rhythm and improve the production efficiency.

In some embodiments of the present application, two adjacent battery cells are spaced apart from each other. In this embodiment, by spacing the two adjacent battery cells apart from each other, when the battery cells deform, the impact on the adjacent battery cells can be reduced, and the safety of the battery can be improved during using.

In some embodiments of the present application, in the battery array, M≥2, and in each row of battery cells, a separating part is arranged between two adjacent battery cells; or
in the battery array, N≥2, and in each column of the battery cells, a separating part is arranged between two adjacent battery cells.

In this embodiment, by arranging the separating part between the two adjacent battery cells in each column, the two adjacent battery cells can be spaced apart from each other, thereby reducing the adverse effect between the two adjacent battery cells, allowing the battery to fully perform, and improving the safety of the battery during using. In addition, by arranging the separating part between the two adjacent battery cells in each row, the two adjacent battery cells can be spaced apart from each other, thereby reducing the adverse effect between the two adjacent battery cells, allowing the battery to fully perform, and improving the safety of the battery during using.

In some embodiments of the present application, the separating part is bonded and fixed to the battery cells. In this embodiment, the separating part is connected and fixed to the battery cells through the adhesive; by means of bonding and fixing, the structure can be simple and easy to be achieved during assembly, which can accelerate the production rhythm, improve production efficiency and reduce the manufacturing cost.

In some embodiments of the present application, the separating part includes at least one of a thermal conductive member, a buffer member, a separating plate or a separating beam. In this embodiment, the separating part can be provided as at least one of the thermal conductive member, the buffer member, the separating plate or the separating beam. On the basis of separating the two adjacent battery cells, the corresponding separating part can be provided according to different requirements, so as to meet the corresponding using requirements of the battery array.

In some embodiments of the present application, the battery cell includes a plurality of surfaces, which include a first surface and a second surface; the first surface is a surface with the largest area, and an area of the second surface is smaller than that of the first surface; the first surface is arranged in the first direction and intersects with a horizontal plane, and the second surface is arranged in the second direction and intersects with the horizontal plane; in the first direction, the second surfaces of two adjacent battery cells in each column of the battery cells are arranged opposite to each other, and in the second direction, the first surfaces of two adjacent battery cells in each row are arranged opposite to each other.

In this embodiment, the first surface is the surface of the battery cell with the largest area, and the area of the second surface is smaller than that of the first surface. By arranging the directions of the first surface and the second surface, the battery array can meet the requirements of different batteries and improve the applicability of the battery.

In some embodiments of the present application, the battery cell includes a plurality of surfaces, which include a first surface and a second surface; the first surface is a surface with the largest area, and an area of the second surface is smaller than that of the first surface; the second surface is arranged in the first direction and intersects with a horizontal plane, and the first surface is arranged in the second direction and intersects with the horizontal plane; the first surfaces of two adjacent battery cells in each column of the battery cells are arranged opposite to each other in the first direction, and the second surfaces of two adjacent battery cells in each row are arranged opposite to each other in the second direction.

In this embodiment, the first surface is the surface of the battery cell with the largest area, and the area of the second surface is smaller than that of the first surface. By arranging the directions of the first surface and the second surface, the battery array can meet the requirements of different batteries and improve the applicability of the battery.

In some embodiments of the present application, the battery cell includes a plurality of surfaces, which include a first surface with the largest area; the first surfaces of two adjacent battery cells in each column of the battery cells are arranged opposite to each other in the first direction, and the first surfaces of two adjacent battery cells in each row are misaligned with each other in the second direction. In this embodiment, the first surface is the surface of the battery cell with the largest area. By arranging the first surfaces of two adjacent battery cells in each row and the first surfaces of two adjacent battery cells in each column, the battery array can meet the requirements of different batteries and improve the applicability of the battery.

In some embodiments of the present application, the battery cell includes a plurality of surfaces, which include a first surface with the largest area; the first surfaces of two adjacent battery cells in each column of the battery cells are misaligned with each other in the first direction, and the first surfaces of two adjacent battery cells in each row are arranged opposite to each other in the second direction. In this embodiment, the first surface is the surface of the battery cell with the largest area. By arranging the first surfaces of two adjacent battery cells in each row and the first surfaces of two adjacent battery cells in each column, the battery array can meet the requirements of different batteries and improve the applicability of the battery.

In some embodiments of the present application, the separating part includes a thermal conductive member, which is arranged in the first direction and intersects with the second direction, the thermal conductive member is arranged on at least one side of each column of the battery cells, and each column of the battery cells are thermally connected to one thermal conductive member. In this embodiment, by arranging the thermal conductive member and arranging the arrangement of the thermal conductive member, the battery cells in each column can be thermally connected to the thermal conductive member, so as to achieve the effective heat dissipation for the battery cells in each column, maintain the battery cells within a relatively safe operating temperature range and improve the using safety of the battery.

In some embodiments of the present application, a channel is provided inside the thermal conductive member to accommodate a heat-exchanging medium. In this embodiment, the battery cells transfer the heat to the heat-exchanging medium in the channel through the thermal conductive member, and the heat-exchanging medium flows in the channel. This heat exchange method has the high heat exchanging efficiency and the structure is simple.

In some embodiments of the present application, the battery further includes at least one current collector, which fluidly communicates with the thermal conductive member.

The current collector is located at one end of the thermal conductive member in the first direction, or the current collectors are located at two ends of the thermal conductive member in the first direction, respectively.

In this embodiment, by arranging the current collector, it can achieve the collection of the heat-exchanging medium inside the thermal conductive member, reduce the number of the parts, and thus improve the space utilization rate inside a housing. In addition, when the battery is subjected to the compression or impact in the second direction, the arranging position of the current collector can avoid the compression or impact, so as to reduce the possibility of damage to the current collector, so that the heat-exchange medium can fully dissipate the heat from the battery, and further reduce the safety hazards caused by the high temperature of the battery.

In some embodiments of the present application, the battery includes two current collectors, which are located at one end of the thermal conductive member in the first direction and arranged in a third direction. Any two of the first direction, the second direction and the third direction intersect with each other. In this embodiment, by arranging two current collectors, the current collecting performance of the heat-exchanging medium can be improved, so that the heat-exchanging medium can have a good flow rate, which can further improve the heat exchanging ability of the heat-exchanging medium to the battery cells. In addition, by arranging the two current collectors at one end in the first direction together and arranging the two current collectors in the third direction, the space occupied by the current collectors in the battery in the first direction can be effectively reduced, thereby facilitating arranging other structures inside the battery.

In some embodiments of the present application, the separating part includes a thermal conductive member, which is arranged in the second direction and intersects with the first direction, the thermal conductive member is arranged on at least one side of each row of the battery cells, and each row of the battery cells are thermally connected to one thermal conductive member. In this embodiment, by arranging the thermal conductive member and arranging the arrangement of the thermal conductive member, the battery cells in each column can be thermally connected to the thermal conductive member, so as to achieve the effective heat dissipation for the battery cells in each row, maintain the battery cells within a relatively safe operating temperature range and improve the using safety of the battery.

In some embodiments of the present application, the battery cell includes an electrode assembly, which includes a main body and an electrode tab protruding from the main body, the electrode tab is electrically connected to the electrode terminal, and a projection of the thermal conductive member and a projection of the main body at least partially overlap with each other to form an overlapping region in the second direction. In this embodiment, by at least partially overlapping the thermal conductive member with the main body in the second direction, the thermal conductive member can effectively exchange the heat of the main body, thereby improving the heat exchanging effect on the battery cells.

In some embodiments of the present application, in the third direction, a size of the main body is L1, a size of the thermal conductive member is L2, any two of the first direction, the second direction and the third direction intersect with each other, and 0.5≤L2/L1≤1.5.

In this embodiment, by setting the value L2/L1 within the range of [0.5, 1.5], the space occupied by the thermal conductive member in the third direction can be reduced, and the space utilization efficiency of the battery can be further improved.

In some embodiments of the present application, in the third direction, a size of the overlapping region is L3, and 0.5≤L3/L1≤1.

In this embodiment, by setting the size of the overlapping region in the third direction, the heat exchanging area between the thermal conductive member and the main body can be reasonably set, thereby greatly improving the heat exchanging effect of the thermal conductive member on the main body.

In some embodiments of the present application, the battery cell includes an electrode terminal, which is arranged on at least one of the plurality of surfaces. In this embodiment, by arranging the electrode terminal, the electrode terminal can achieve the electrical discharge of the battery cells, thereby ensuring that the battery cells can effectively perform the charging and discharging operations.

In some embodiments of the present application, the plurality of surfaces further include a third surface, the first surface, the second surface and the third surface intersecting with one another, and the electrode terminal is arranged on the third surface. In this embodiment, by arranging the position of the electrode terminal, the structure of the battery cell can meet the mounting requirements of different batteries, thereby improving the applicability of the battery cell.

In some embodiments of the present application, the plurality of surfaces further include two third surfaces, the two third surfaces are arranged opposite to each other and intersect with the first surface, the battery cell includes two electrode terminals with opposite polarities, and the two electrode terminals with the opposite polarities are both arranged on one of the two third surfaces, or the two electrode terminals with the opposite polarities are arranged on the two third surfaces, respectively. In this embodiment, by arranging the position of the electrode terminal, the structure of the battery cell can meet the mounting requirements of different batteries, thereby improving the applicability of the battery cell.

In some embodiments of the present application, the battery cell includes two electrode terminals with opposite polarities, which are both arranged on the third surface, or one of the two electrode terminals with opposite polarities is arranged on the third surface, and a casing of the battery cell forms the other one of the two electrode terminals with opposite polarities. In this embodiment, by arranging the position of the electrode terminal, the structure of the battery cell can meet the mounting requirements of different batteries, thereby improving the applicability of the battery cell.

In some embodiments of the present application, the battery cell includes the first surface and a fourth surface arranged opposite to the first surface, the first surface and the fourth surface are arranged opposite to each other in the first direction or the second direction, a concave part is arranged at an edge of the fourth surface, the first surface is configured to arrange the electrode terminal, which protrudes from the first surface in the second direction and corresponds to the concave part. In this embodiment, by arranging the position of the electrode terminal, the structure of the battery cell can meet the mounting requirements of different batteries, thereby improving the applicability of the battery cell.

In some embodiments of the present application, each column of the battery cells include at least two battery cells, which are arranged in the first direction. In this embodiment, at least two battery cells are arranged in the first direction, so as to facilitate the arrangement of the battery cells inside the housing.

In some embodiments of the present application, in the first direction, a maximum size of the battery cell is L, and a value of LID ranges from 1 to 30. In this embodiment, by setting the sizes of the battery cell in the first direction and the second direction, the electric power of battery cell can increase as much as possible.

In some embodiments of the present application, in the first direction, a maximum size of the battery cell is L; in the third direction, a maximum size of the battery cell is H; a value of L/H ranges from 0.5 to 6; and any two of the first direction, the second direction and the third direction intersect with each other. In this embodiment, the size of the battery cell is set according to the above-mentioned ratio, so that the electric power of battery cell can increase as much as possible.

In some embodiments of the present application, the battery further includes a housing. The housing includes two inner walls, which are arranged opposite to each other in the second direction, and a maximum distance between the two inner walls is D2, N*D=n*D2, and nE [0.7, 0.99]. In this embodiment, by setting the ratio between N*D and D2, the battery array can be more suitable for the housing of the battery, and can effectively improve the space utilization efficiency of the battery while meeting the mounting requirements of the battery array, so that the energy density of the battery can effectively increase.

In some embodiments of the present application, the battery cells are fixedly connected to the housing through a first adhesive layer, the battery further includes a thermal conductive member, which is thermally connected to the battery cells through a second adhesive layer, and a thermal conductive coefficient of the first adhesive layer is less than or equal to that of the second adhesive layer. In this embodiment, since the first adhesive layer is used to fixedly connected the battery cells with the housing, and the second adhesive layer is used to thermally connected the battery cells with the thermal conductive member, the thermal conductive coefficient of the first adhesive layer is set to be less than or equal to that of the second adhesive layer, so as to ensure more effective heat dissipation for the battery cells through the thermal conductive member.

In some embodiments of the present application, a ratio of the thermal conductive coefficient of the first adhesive layer to the thermal conductive coefficient of the second adhesive layer ranges from 0.1 to 1. In this embodiment, by setting the range of the above ratio, the battery cells can effectively dissipate heat through the thermal conductive member.

In some embodiments of the present application, the battery cell includes an electrode assembly, which is in a winding structure and in a shape of a flat, an outer surface of the electrode assembly includes two flat planes, which face to each other in the second direction; or
the electrode assembly is in a stacked structure and includes a first electrode plate, a separator and a second electrode plate, which are stacked in the second direction.

In this embodiment, the electrode assembly is in the winding structure and in the shape of the flat, the outer surface of the electrode assembly includes two flat planes, which face to each other in the second direction, or the electrode assembly is in the stacked structure, so that the space occupied by the electrode assembly in the first direction can be reduced, so as to facilitate the arrangement and mounting of other parts in the battery in the first direction.

In a second aspect, the present application provides an electric-consuming device, including the battery as described above, which is configured to provide electrical energy to drive the electric-consuming device to move.

In some embodiments of the present application, in a case that the length direction of the battery is different from the travelling direction of the electric-consuming device, the first direction is the travelling direction of the electric-consuming device.

In this embodiment, the first direction is set as the travelling direction of the electric-consuming device, and the third direction intersects with the first direction and the horizontal direction. The battery cell located inside the housing of the battery includes the first surface and the second surface. The first surface is provided with the electrode terminal, and the second surface is connected to the housing. By setting the first direction, it can facilitate the mounting and arrangement of the battery on the electric-consuming device. By adjusting the arrangement of the battery cells inside the housing, it can meet the using requirements of different electric-consuming devices.

The above description is only an overview of the technical solution of the present application. In order to have a clearer understanding of the technical solution of the present application, the technical solution can be implemented according to the content of the description. In order to make the above and other purposes, features, and advantages of the present application more obvious and easy to be understood, the specific embodiments of the present application are listed below.

### BRIEF DESCRIPTION OF THE DRAWINGS

Fig. 1 schematically shows a structural schematic view of a vehicle according to an embodiment of the present application;
Fig. 2 schematically shows an exploded structural schematic view of a battery according to an embodiment of the present application;
Fig. 3 schematically shows a structural schematic view of a battery assembly according to an embodiment of the present application;
Fig. 4 schematically shows an exploded structural schematic view of a battery cell according to an embodiment of the present application;
Fig. 5 schematically shows an exploded structural schematic view of a battery according to an embodiment of the present application;
Fig. 6 schematically shows a structural schematic view of a battery assembly according to an embodiment of the present application;
Fig. 7 schematically shows a structural schematic view of an battery cell in the battery assembly shown in Fig. 6;
Fig. 8 schematically shows a structural schematic view of a battery assembly according to an embodiment of the present application;
Fig. 9 schematically shows a structural schematic view of an battery cell in the battery assembly shown in Fig. 8;
Fig. 10 schematically shows a structural schematic view of a battery assembly according to an embodiment of the present application;
Fig. 11 schematically shows a structural schematic view of a battery assembly according to an embodiment of the present application;
Fig. 12 schematically shows a structural schematic view of a battery cell in the battery assembly shown in Fig. 10 and Fig. 11;
Fig. 13 schematically shows a structural schematic view of a battery assembly according to an embodiment of the present application;
Fig. 14 schematically shows a structural schematic view of an battery cell in the battery assembly shown in Fig. 13;
Fig. 15 schematically shows a structural schematic view of a battery assembly according to an embodiment of the present application;
Fig. 16 schematically shows a structural schematic view of an battery cell in the battery assembly shown in Fig. 15;
Fig. 17 schematically shows a structural schematic view of a battery assembly according to an embodiment of the present application;
Fig. 18 schematically shows a structural schematic view of an battery cell in the battery assembly shown in Fig. 17;
Fig. 19 schematically shows a structural schematic view of a battery assembly according to an embodiment of the present application;
Fig. 20 schematically shows a structural schematic view of an battery cell in the battery assembly shown in Fig. 19;
Fig. 21 schematically shows a structural schematic view of a battery assembly according to an embodiment of the present application;
Fig. 22 schematically shows a structural schematic view of an battery cell in the battery assembly shown in Fig. 21;
Fig. 23 schematically shows a structural schematic view of a battery assembly according to an embodiment of the present application;
Fig. 24 schematically shows a structural schematic view of an battery cell in the battery assembly shown in Fig. 23;
Fig. 25 schematically shows a structural schematic view of a thermal conductive member according to an embodiment of the present application;
Fig. 26 schematically shows a structural schematic view of a second portion of a housing according to an embodiment of the present application;
Fig. 27 schematically shows a structural schematic view of a battery according to an embodiment of the present application (a first portion of a housing is not shown);
Fig. 28 shows an enlarged structural schematic view of part A shown in Fig. 27;
Fig. 29 shows a sectional view of part B-B shown in Fig. 27;
Fig. 30 shows an enlarged structural schematic view of part C shown in Fig. 29;
Fig. 31 shows a structural schematic view of the battery assembly shown in Fig. 27;
Fig. 32 shows a structural schematic view of the battery assembly shown in Fig. 31 in another view; and
Fig. 33 shows a distribution structural schematic view of a battery in a vehicle according to an embodiment of the present application.

The reference numerals are as follows:
1-electric-consuming device;
10-battery; 11- controller; 12-motor;
20-battery array; 21-battery cell; 211-casing; 212-end cover; 213-electrode assembly; 2131-main body; 2132-electrode tab; 214-electrode terminal; 215-press-releasing mechanism; 216-first surface; 217-second surface; 218-third surface;
30-housing; 31-first portion; 32-second portion;
40-thermal conductive member;
50-current collector;
60-first adhesive layer;
70-second adhesive layer.

### DETAILED DESCRIPTION

Embodiments of the technical solutions of the present application will be described in detail below in conjunction with the drawings. The following examples are only used to illustrate the technical solution of the present application more clearly, and therefore are only examples, rather than restricting the protection scope of the present application.

Unless otherwise defined, technical terms or scientific terms used in the present disclosure should be interpreted according to common meanings thereof as commonly understood by those of ordinary skills in the art. The terms used in the text are only for the purpose of describing specific embodiments and are not intended to limit the present application. The terms "including" and "having" in the description and the claims of the present application and the above description of the drawings, and any variations thereof are intended to cover non-exclusive inclusions.

In the description of the embodiments of the present application, the technical terms "first", "second" and the like are only used to distinguish different objects and cannot be understood as indicating or implying the relative importance or implying the quantity, specific order or the primary-and-secondary relationship of the indicated technical features. In the description of the embodiments of the present application, "plurality" means two or more, unless otherwise specifically defined.

The "embodiments" referred in the present application means that specific features, structures or characteristics described in conjunction with the embodiments may be included in at least one embodiment of the present application. This word appeared in various places in the description does not necessarily refer to the same embodiment, nor is it an independent or alternative embodiment mutually exclusive with other embodiments. It is understood explicitly and implicitly by those skilled in the art that the embodiments described herein can be combined with other embodiments.

In the description of the embodiments of the present application, the term "and/or" is merely an association relationship describing associated objects, which means that there can be three types of relationships. For example, "A and/or B" can mean three cases that there is only A, there are A and B at the same time, and there is only B. In addition, the punctuation mark "/" in the present application generally indicates that the related objects of the preceding content and following content are in an "or" relationship.

In the description of the embodiments of the present application, the term "plurality" refers to two or more (including two), similarly, "a plurality of groups" refers to two or more (including two) groups, and similarly, "a plurality of sheets" refers to two or more (including two) sheets.

In the description of the present application, the technical terms "center", "longitudinal", "lateral", "length", "width", "thickness", "upper", "lower", "front", "back", "left", "right", "vertical", "horizontal", "top", "bottom", "inner", "outer", "clockwise", "counterclockwise", "axial", "radial" and "circumferential" and the like indicate the orientation or positional relationship only for the convenience of describing the present application and simplifying the description, rather than indicating or implying that the device or the element referred to must have a specific orientation, be configured and operated in a specific orientation, and therefore cannot be understood as a limitation of the present application.

In the description of the present application, unless otherwise clearly specified and limited, the technical terms "mount", "communicate", "connect", "fix" and the like should be understood in a broad sense, for example, it can be a fixed connection, a detachable connection, or an integral connection, it can be a mechanical connection, or an electrical connection, it can be a direct connection, or it can be connected indirectly through an intermediary, and it can be an internal communication of two elements or an interaction relationship between two elements. For those of ordinary skill in the art, the specific meaning of the above-mentioned terms in the present application can be understood according to specific situations.

At present, with the development of the market, the application of power batteries is becoming increasingly widespread. The power batteries are not only used in energy storage power systems such as a hydropower station, firepower station, wind power station, and solar power station, but also widely used in electric vehicles such as an electric bicycle, an electric motorcycle and an electric vehicle, as well as other fields such as military apparatus and aerospace. With the continuous expansion of the application field of the power batteries, the market demand of the power batteries is also constantly expanding.

The applicant notes that the power battery typically includes a housing and a plurality of battery cells which are arranged in the housing in array. The arrangement of battery cells in the prior art results in the low space utilization efficiency of the battery, which is not conducive to improving the energy density of the battery. Therefore, how to solve the problem of the low space utilization efficiency of the battery in the prior art has become an urgent technical problem for those skilled in the art.

In order to solve the problem of the low space utilization efficiency of the battery in the prior art, the inventors of the present application have found that the battery cell(s) inside the housing of the battery is(are) formed into a battery array. The battery array includes M*N battery cell(s), M≥1, N≥1, and both M and N are positive integers. The battery cell(s) in each column of the battery array is(are) arranged in a first direction, which is a length direction of the battery or a travelling direction of an electric-consuming device including the battery. The battery cell(s) in each row of the battery array is(are) arranged in a second direction, which intersects with the first direction and a vertical plane. A maximum size of the battery cell in the second direction is D, a maximum size of the battery array in the second direction is D1, and N*D/D1∈[0.70, 0.99], so that a structure of the battery array formed by all battery cells can be more compact. When the battery array is arranged inside the battery, an internal space of the battery can be fully utilized, the space utilization efficiency of the battery can be improved, and the energy density of the battery can be improved.

The battery cell involved in the present embodiment may be used, but are not limited to, in the electric-consuming device such as a vehicle, a ship and an aircraft. A power source system including the battery cells, the battery and other parts related to the present application can be used.

In the embodiments of the present application, the electric-consuming device using the battery as a power source may be, but not limited to, a mobile phone, a tablet, a laptop, an electric toy, an electric tool, a battery car, an electric car, a ship, a spacecraft and the like. Herein, the electric toy can include a stationary electric toy or a mobile electric toy, such as a game console, an electric car toy, an electric boat toy, an electric airplane toy and the like, and the spacecraft can include an airplane, a rocket, a space shuttle, a spaceships and the like.

It should be understood that the technical solution described in embodiments of the present application is not only limited to the battery and the electric-consuming device as described above, but can also be applicable to all batteries including the housings and all electric-consuming devices using the batteries. However, for the sake of simplicity, the following embodiments will be explained taking an electric vehicle as an example.

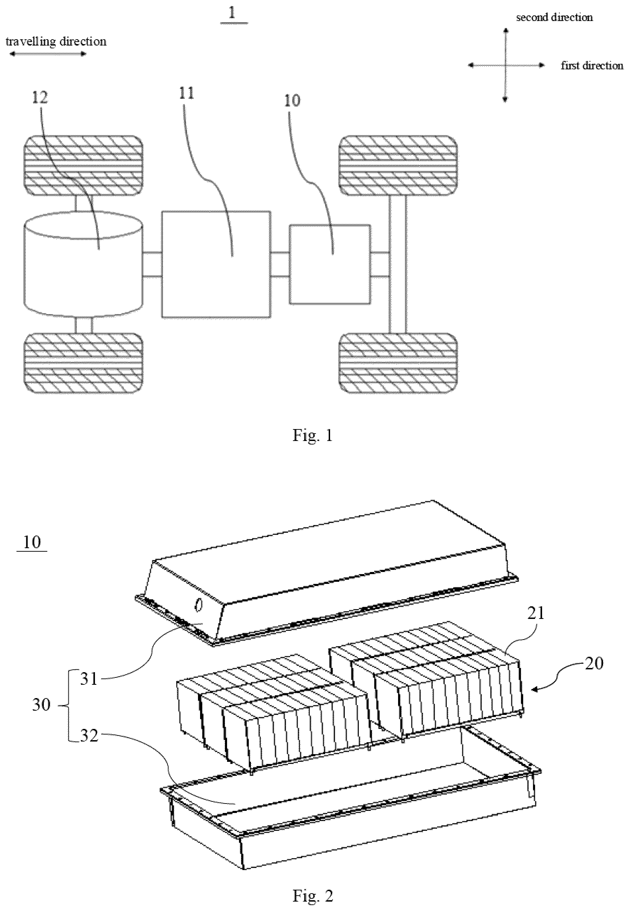

Referring to Fig. 1, Fig. 1 shows a structural schematic view of the vehicle according to some embodiments of the present application. The vehicle can be a fuel vehicle, a gas vehicle or a new energy vehicle. The new energy vehicles can be a pure electric vehicle, a hybrid vehicle, an extended-range vehicle and the like. A battery 10 may be arranged at an inside of the vehicle, and the battery 10 may be arranged at the bottom, the front or the back of the vehicle. The battery 100 can be used to supply power to the vehicle, for example, the battery 10 can be used as an operating power source of the vehicle. The vehicle may further include a controller 11 and a motor 12, the controller 11 can be used to control the battery 10 to supply power to the motor 12, for example, for starting, navigating and driving the vehicle.

In some embodiments of the present application, the battery 10 can not only be used as an operating power source for the vehicle, but can also be used as a driving power source for the vehicle, replacing or partially replacing the fuel oil or the natural gas to provide driving power for the vehicle.

In order to meet different requirements of using electricity power, the battery 10 may include a plurality of battery cells. The battery cell refers to the smallest unit constituting a battery module or a battery pack. The plurality of battery cells can be connected in series and/or in parallel through an electrode terminal to apply to various application scenarios. The battery referred to in the present application may include the battery module or the battery pack. Herein, the plurality of battery cells can be connected in series, in parallel or in hybrid. The connection in hybrid refers to the combination of the connection in series and the connection in parallel. The battery 10 can also be referred to as the battery pack. In the embodiments of the present application, the plurality of battery cells can directly form the battery pack, or can form the battery assembly firstly, and then form the battery pack.

Fig. 2 shows a structural schematic view of the battery 10 according to an embodiment of the present application. In Fig. 2, the battery 10 can include a plurality of battery assemblies 20 and a housing 30, and the plurality of battery assemblies 20 can be accommodated in the housing 30. The housing 30 can be used to accommodate battery cells 21 or the battery assemblies 20 to prevent the charging or discharging of battery cells from being affected by the liquids or other foreign objects. The housing 30 can be a simple three-dimensional structure such as a single cuboid, a single cylinder or a single sphere, the housing 30 can also be a complex three-dimensional structure composed of the simple three-dimensional structures such as a cuboid, a cylinder or a sphere, and the embodiments of the present application do not restrict to that. The material of housing 30 can be an alloy material such as aluminum alloy, iron alloy or the like, or a polymer material such as a polycarbonate, a polyisocyanurate foam plastic or the like, or a composite material such as glass fiber, epoxy resin or the like, and the embodiments of the present application do not restrict to that.

In some embodiments, as shown in Fig. 2, the housing 30 may include a first portion 31 and a second portion 32, the first portion 31 and the second portion 32 can cover each other, and the first portion 31 and the second portion 32 jointly define an accommodating space for accommodating the battery cells 21. The second portion 32 can be a hollow structure with an opening at an end, the first portion 31 can be a plate-shaped structure, and the first portion 31 can cover on an opening side of the second portion 32 to form the casing with the accommodating space. Alternatively, each of the first portion 31 and the second portion 32 can also be the hollow structure with the opening on a side, and the opening side of the first portion 31 can cover the opening side of the second portion 32.

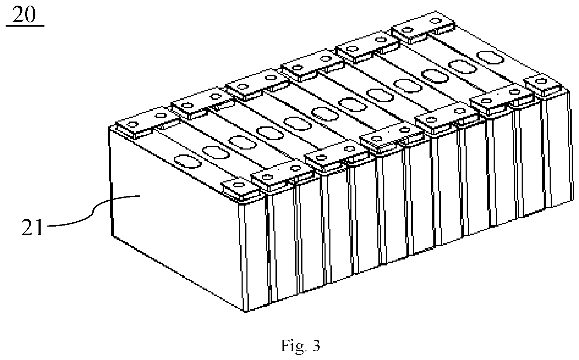

Fig. 3 schematically shows a structural schematic view of a battery assembly 20 according to an embodiment of the present application. In Fig. 3, the battery assembly 20 includes a plurality of battery cells 21. The plurality of battery cells 21 may be connected in series, in parallel, or in hybrid to form the battery assembly 20 firstly, then the plurality of battery assembly 20 are connected in series, in parallel, or in hybrid to form the battery. In the present application, the battery cell 21 can include a lithium ion battery cell, a sodium ion battery cell, a magnesium ion battery cell or the like, and the embodiments of the present application do not restrict to that. The battery cell 21 can be in a shape of cylinder, flat shape, cuboid or other shapes, and the embodiments of the present application do not restrict to that. Generally, the battery cell 21 can be divided into three types according to the packaging method: a cylindrical battery cell, a square battery cell, and a soft pack battery cell, and the embodiments of the present application do not restrict to that.

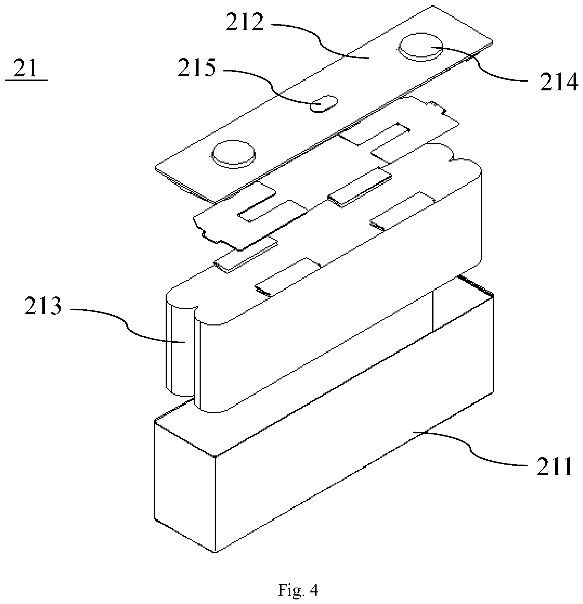

Fig. 4 schematically shows an exploded structural schematic view of a battery cell 21 according to an embodiment of the present application. The battery cell 21 includes a casing 211, end cover 212 and an electrode assembly 213.

The end cover 212 refers to a component that covers an opening of the casing 211 to isolate an internal environment of the battery cell 21 from an external environment. Unrestrictedly, the shape of the end cover 212 can adapt to the shape of the casing 211 to match with the casing 211. Optionally, the end cover 212 can be made of a material (such as aluminum alloy) with a certain hardness and strength, so that the end cover 212 may be less prone to deformation when subjected to compression and collision, the battery cell 21 is enabled to obtain a higher structural strength, and the safety performance can be improved. The end cover 212 can be made of various materials, such as copper, iron, aluminum, stainless steel, aluminum alloy or plastic, and the embodiments of the present application do not specially restrict to that. In some embodiments, an insulating member can also be arranged on an inner side of the end cover 212, and the insulating member can be used to isolate the electrical connection parts in the casing 211 from the end cover 212 to reduce the risk of the short circuit. Exemplarily, the insulating member may be a plastic, a rubber or the like.

The casing 211 may be an assembly used to match with the end cover 212 to form the internal environment of the battery cell 21. Herein, the formed internal environment can be used to accommodate the electrode assembly 213, electrolyte and other parts. The casing 211 and the end cover 212 can be independent parts, and an opening can be formed on the casing 211. The end cover 212 can cover the opening at the place of the opening to form the internal environment of the battery cell 21. For no purpose of limitation, the end cover 212 and the casing 211 can also be integrated. Specifically, the end cover 212 and the casing 211 can form a common connecting surface before other parts entering into the shell firstly, then the end cover 212 can cover the casing 211 when it is necessary to package an interior of the casing 211. The casing 211 can be of various shapes and sizes, such as a rectangle, a cylinder, a hexagonal prism or the like. Specifically, the shape of the casing 211 can be determined based on the specific shape and size of the electrode assembly. The casing 211 can be made of various materials, such as copper, iron, aluminum, stainless steel, aluminum alloy or plastic, and the embodiments of the present application do not specially restrict to that.

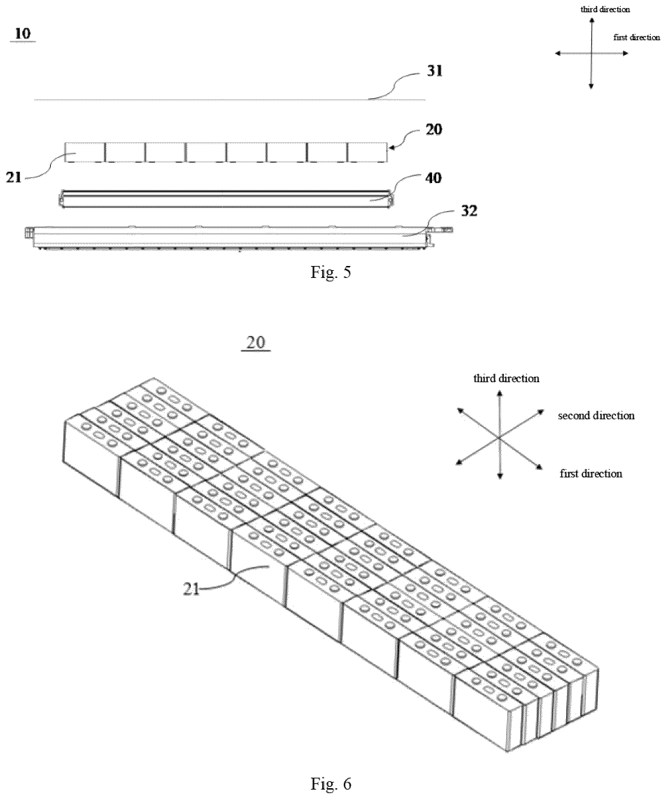

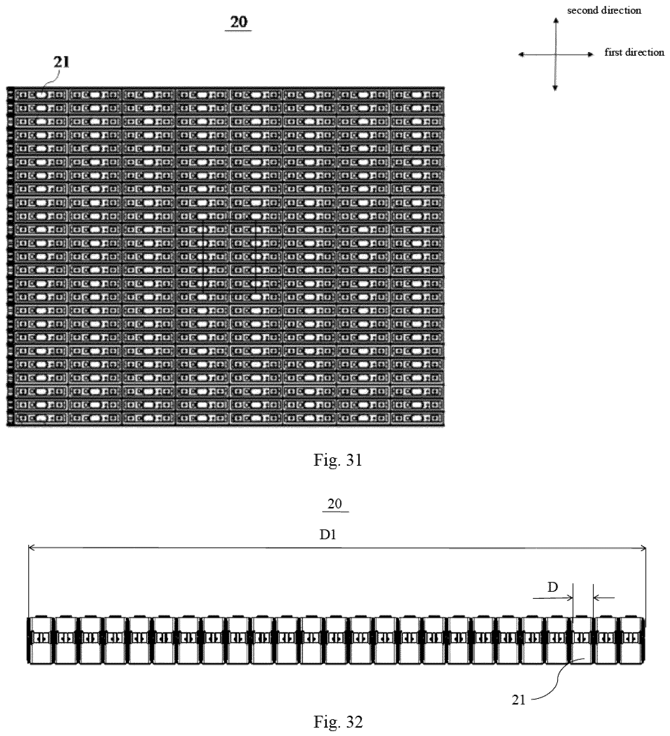

In some embodiments of the present application, as shown in Fig. 5 to Fig. 32, the present application provides a battery 10 including a battery array 20 formed by M*N battery cell(s) 21 arranged in M rows and N columns, M≥1, N≥1, and both M and N being positive integers. The battery cell(s) 21 in each row of the battery array 20 is(are) arranged in the first direction, which is the length direction of the battery 10 or the travelling direction of the electric-consuming device 1 including the battery 10, and the battery cell(s) 21 in each column of the battery array 20 is(are) arranged in the second direction, which intersects with the first direction and a vertical plane. As shown in Fig. 31 and Fig. 32, a maximum size of the battery cell 21 in the second direction is D, a maximum size of the battery array 20 in the second direction is D1, and N*D/D1∈[0.70, 0.99].

In the present application, the battery array 20 may be a structure with at least one row and at least one column, such as two rows and one column, one row and two columns, or two rows and two columns. As shown in Fig. 31, in the embodiments as shown in the drawings of the present application, the battery array 20 is the structure with a plurality of rows (three or more rows) and a plurality of columns (three or more columns).

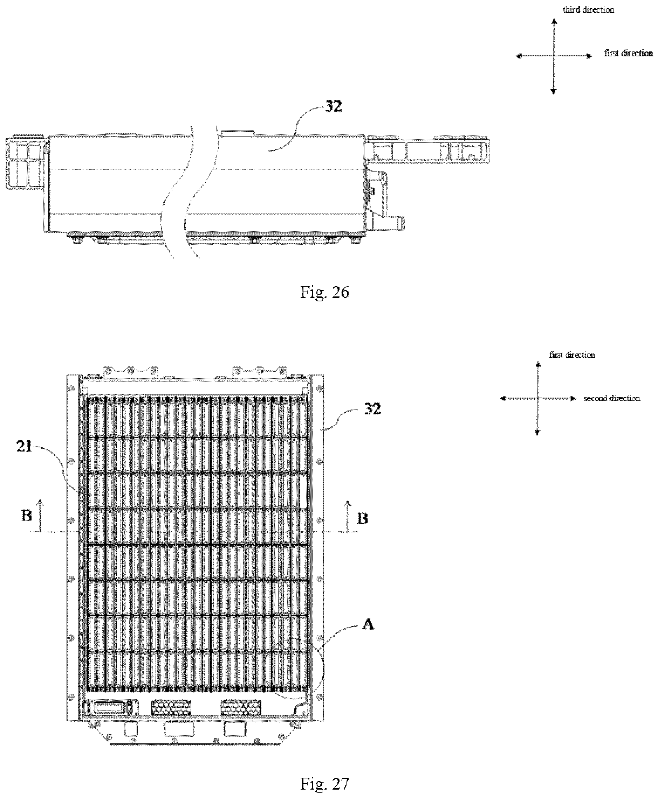

In addition, as shown in Fig. 27, the battery 10 is a substantially cubic structure with the length direction, a width direction and a height direction. The first direction is the length direction of the battery 10 or the travelling direction of the electric-consuming device 1. The length direction of the battery 10 can be the same or different from a driving direction. The second direction and the first direction are located in the same plane and intersect with each other. In addition, the present application further provides a third direction. Any two the third direction, the second direction and the first direction intersect with each other.

Specifically, as shown in Fig. 31, all the battery cells 21 form the battery array 20. Each column of the battery array 20 is arranged in the first direction, and each row of the battery array 20 is arranged in the second direction. In the second direction, the maximum size of the battery cell 21 is D, and the maximum size of the battery array 20 is D1. A value of N*D/D1 ranges within [0.70, 0.99], so that the structure of the battery array 20 formed by all the battery cells 21 can be more compact. When the battery array 20 is arranged inside the battery 10, an internal space of the battery 10 can be fully utilized, the space utilization efficiency of the battery 10 can be improved, and the energy density of the battery 10 can be improved.

It should be understood that in the present application, the battery array 20 can also be referred to as a battery assembly.

It should be noted that the closer the value of N*D/D1 is to 1, the higher the space utilization efficiency of the battery 10 is, and the higher the energy density of battery 10 is. However, due to the manufacturing tolerance or the requirement for the interval arrangement between two adjacent battery cells 21 in battery array 20, the value of N*D/D1 cannot be set to 1. When the value of N*D/D1 is less than 0.70, the space utilization efficiency and the energy density of the battery will be reduced. Therefore, according to the actual operating condition of battery array 20, the value of N* D/D 1 is set within the range of [0.70, 0.99], which can make the structure of battery array 20 more compact while meeting the using requirements of the battery 10, so as to improve the space utilization efficiency and the energy density of the battery 10.

Additionally, in this embodiment, the value of N*D/D1 may be 0.70, 0.75, 0.80, 0.85, 0.90, 0.95... 0.99.

In some embodiments of the present application, as shown in Fig. 31, in the second direction, the maximum size of the battery cell 21 is D, the maximum size of the battery array 20 is D1, and N*D/D1∈[0.83, 0.99],
Specifically, by further setting the value of N*D/D1 within the range of [0.83, 0.99], the battery array 20 can fully utilize its performance and have a more compact structure, which is conducive to improving the space utilization and energy density of the battery 10.

It should be noted that in this embodiment, the values of N*D/D1 may be 0.83, 0.85, 0.87, 0.89, 0.90, 0.92... 0.99.

It will be specifically illustrated according to the specific experimental data as follows.

In the experiments, the length direction of battery cell 21 is consistent with the first direction, the width direction of battery cell 21 is consistent with the second direction, and the height direction of battery cell 21 is consistent with the third direction; D is the width of battery cell 21, and D1 is the width of battery array 20 in the width direction of battery cell 21. As shown in Table 1:

**Table 1**

| Number | Numb er of rows (M) | Number of column (N) | Length of battery cell (mm) | Width of battery cell (mm) | Height of battery cell (mm) | N*D (mm) | D1 (mm) | N*D/D1 | Energy density (MJ/L) |
|---|---|---|---|---|---|---|---|---|---|
| Embodime nt 1 | 8 | 30 | 148 | 27 | 92 | 810 | 1158 | 0.7 | 0.83 |
| Embodime nt 2 | 8 | 30 | 148 | 27 | 92 | 810 | 1080 | 0.75 | 0.84 |
| Embodime nt 3 | 8 | 30 | 148 | 27 | 92 | 810 | 1012.5 | 0.8 | 0.86 |
| Embodime nt 4 | 8 | 30 | 148 | 27 | 92 | 810 | 975.9 | 0.83 | 0.87 |
| Embodime nt 5 | 8 | 30 | 148 | 27 | 92 | 810 | 920.5 | 0.88 | 0.89 |
| Embodime nt 6 | 8 | 30 | 148 | 27 | 92 | 810 | 880.4 | 0.92 | 0.9 |
| Embodime nt 7 | 8 | 30 | 148 | 27 | 92 | 810 | 818.2 | 0.99 | 0.93 |
| Comparati ve example 1 | 8 | 30 | 148 | 27 | 92 | 810 | 1246 | 0.65 | 0.75 |

It can be seen from the above embodiments that the energy density of battery 10 gradually increases when the value of N*D/D1 approaches to 1. Therefore, by reasonably controlling the value of N*D/D1, it can ensure that the battery 10 has the high energy density while the battery 10 can fully exert its performance.

In some embodiments of the present application, the length direction of the battery 10 is parallel to or intersects with the travelling direction of the electric-consuming device 1.

In this embodiment, the travelling direction of the electric-consuming device 1 refers to the direction in which the electric-consuming device 1 can generate the relative displacement, which can be forward or backward. When the length direction of battery 10 is parallel to the travelling direction of the electric-consuming device 1, the length direction of the battery 10 is set in the travelling direction of electric-consuming device 1; when the length direction of battery 10 intersects with the travelling direction of electric-consuming device 1, the length direction of battery 10 is set at an angle to the travelling direction of electric-consuming device 1, in which the angle is not equal to 0.

Specifically, by setting the relationship between the length direction of the battery 10 and the travelling direction of the electric-consuming device 1, the battery 10 can be mounted on the electric-consuming device 1 according to the requirements of the electric-consuming device 1, so that the convenience of arrangement of the battery 10 in the electric-consuming device 1 can be improved.

In some embodiments of the present application, in the battery array 20, M≥2, and in each row of the battery cells 21, an adhesive is provided between two adjacent battery cells 21.

Specifically, the battery array 20 is arranged in M rows and N columns. When the number of battery cells 21 in each row is more than or equal to two, the two adjacent battery cells in each row can be connected and fixed by the adhesive. By using the adhesive to connect and fix the adjacent battery cells, the structure of the battery array is simple and easy to be achieved during assembly, which can accelerate the production rhythm and improve production efficiency.

It should be noted that the adhesive used to connect the two adjacent battery cells 21 in each row mat be a paste-like substance or a double-sided adhesive.

In addition, in the present application, the row in the battery array 20 can be arranged in the first direction or the second direction.

In some embodiments of the present application, in the battery array 20, N≥2, in each column of the battery cells 21, an adhesive is provided between two adjacent battery cells 21.

It should be noted that the adhesive used to connect the two adjacent battery cells 21 in each column mat be a paste-like substance or a double-sided adhesive.

In addition, in the present application, the column in the battery array 20 can be arranged in the first direction or the second direction.

Specifically, the battery array 20 is arranged in M rows and N columns. When the number of battery cells 21 in each column is more than or equal to two, the two adjacent battery cells 21 in each column can be connected and fixed by the adhesive. By using the adhesive to connect and fix the adjacent battery cells 21, the structure of the battery array is simple and easy to be achieved during assembly, which can accelerate the production rhythm and improve production efficiency.

In some embodiments of the present application, each two adjacent battery cells 21 are spaced apart from each other.

Specifically, in this embodiment, the battery array 20 includes M rows and N columns. When each of M rows and N columns is more than 1, two adjacent battery cells 21 in each row are spaced apart from each other, and two adjacent battery cells 21 in each column of the battery cells 21 are spaced apart from each other. By spacing two adjacent battery cells 21 apart from each other, the direct contact between the two adjacent battery cells 21 can be avoided. When the battery cells 21 deform, the impact on the adjacent battery cells 21 can be reduced, and the safety of the battery 10 can be improved during using.

It should be understood that battery cells 21 will expand during using. If the two adjacent battery cells 21 abut against each other, once one of the battery cells 21 expands, it will compress the other battery cell 21, thereby affecting the performance of the other battery cell 21.

It should be noted that the smaller the distance between the two adjacent battery cells 21 is while meeting the requirements, the more the space utilization efficiency and the energy density of battery 10 can be improved.

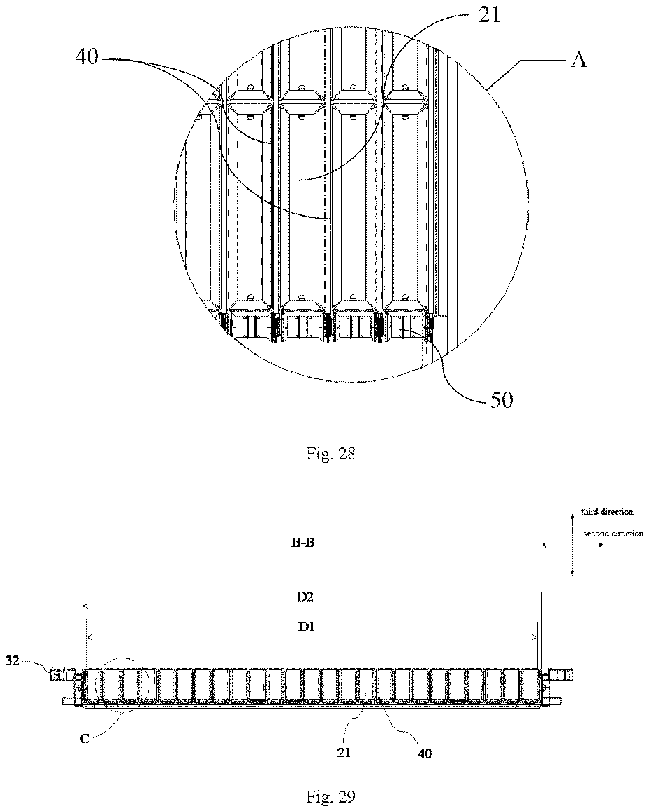

In some embodiments of the present application, as shown in Fig. 29 to Fig. 30, in the battery array 20, M≥2, and in each row of battery cells 21, a separating part is arranged between two adjacent battery cells 21.

Specifically, by arranging the separating part between the two adjacent battery cells 21 in each row, the two adjacent battery cells 21 can be spaced apart from each other, thereby reducing the adverse effect between the two adjacent battery cells 21, allowing the battery 10 to fully perform, and improving the safety of the battery 10 during using.

It should be understood that the separating part is arranged between two adjacent battery cells 21 in each row, thereby improving the overall strength of battery array 20, reducing the adverse effect from the external factors such as vibration on battery array 20, and effectively enhancing the adaptability of battery 10.

In some embodiments of the present application, in the battery array 20, N≥2, and in each column of the battery cells 21, a separating part is arranged between two adjacent battery cells 21 are spaced apart from each other.

Specifically, by arranging the separating part between the two adjacent battery cells 21 in each column, the two adjacent battery cells 21 can be spaced apart from each other, thereby reducing the adverse effect between the two adjacent battery cells 21, allowing the battery 10 to fully perform, and improving the safety of the battery during using.

It should be understood that the separating part is arranged between two adjacent battery cells 21 in each column, thereby improving the overall strength of battery array 20, reducing the adverse effect from the external factors such as vibration on battery array 20, and effectively enhancing the adaptability of battery 10.

In some embodiments of the present application, the separating part is bonded and fixed to the battery cells 21.

Specifically, the separating part is connected and fixed to the battery cells 21 through the adhesive; by means of bonding and fixing, the structure can be simple and easy to be achieved during assembly, which can accelerate the production rhythm, improve production efficiency and reduce the manufacturing cost.

In some embodiments of the present application, the separating part includes at least one of a thermal conductive member 40, a buffer member, a separating plate or a separating beam.

Specifically, the separating part can be provided as at least one of the thermal conductive member 40, the buffer member, the separating plate or the separating beam. On the basis of separating two adjacent battery cells 21, the corresponding separating part can be provided according to different requirements, so as to meet the corresponding using requirements of the battery array 20.

In some embodiments of the present application, the separating part is a buffer member, which is arranged between two adjacent battery cells 21. The buffer member can eliminate the tolerance of the two adjacent battery cells 21 generated in the manufacturing process, thereby ensuring the effective mounting of the battery cells 21. In addition, the buffer member can provide the buffer between the two adjacent battery cells 21, thereby reducing the risk of compression and damage between the two adjacent battery cells 21.

In some embodiments of the present application, the separating part may be the separating plate, which is arranged between two adjacent battery cells 21. The separating plate can be used to separate the two adjacent battery cells 21 to prevent them from being crushed and damaged by each other.

In some embodiments of the present application, the separating part may be the separating beam, which is arranged between two adjacent battery cells 21. The separating beam can be used to separate the two adjacent battery cells 21 to prevent them from being crushed and damaged by each other.

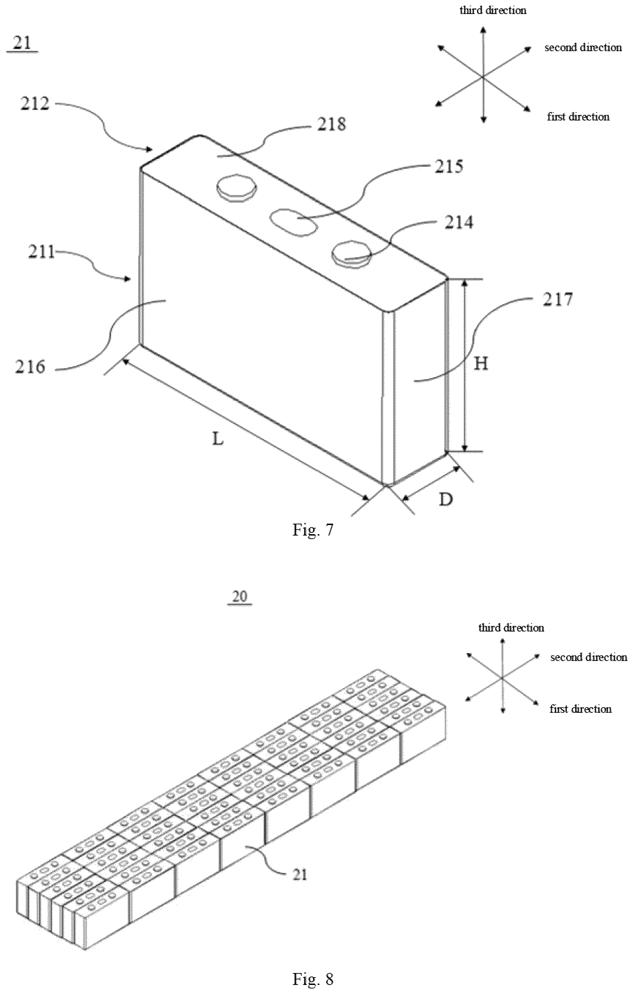

In some embodiments of the present application, as shown in Fig. 6 and Fig. 7, the battery cell 21 includes a plurality of surfaces, which include a first surface 216 and a second surface 217; the first surface 216 is a surface with the largest area, and an area of the second surface 217 is smaller than that of the first surface 216; the first surface 216 is arranged in the first direction and intersects with a horizontal plane, and the second surface 217 is arranged in the second direction and intersects with the horizontal plane; in the first direction, the second surfaces 217 of two adjacent battery cells 21 in each column of the battery cells 21 are arranged opposite to each other, and in the second direction, the first surfaces 216 of two adjacent battery cells 21 in each row are arranged opposite to each other.

Specifically, the first surface 216 is the surface of the battery cell 21 with the largest area, and the first surface 216 is arranged in the first direction and intersects with a horizontal plane. A thermal conductive member 40 can be arranged on a side of the first surface 216. By utilizing the thermal connection between the thermal conductive member 40 and the first surface 216, the contact area between the thermal conductive member 40 and the battery cell 21 can increase, so as to improve the heat dissipation efficiency of the battery cell 21. In addition, the first surface 216 is the surface with the largest area of the battery cell 21. The first surface 216 is arranged in the first direction and intersects with the horizontal plane. A corresponding reinforcement structure (such as a reinforcement beam or a reinforcement rib) can be arranged on a side of the housing 30 corresponding to the first surface 216, so as to improve the protective performance to the battery cell 21.

The first surface 216 is the surface of the battery cell 21 with the largest area, and the area of the second surface 217 is smaller than that of the first surface 216. By arranging the direction of the first surface 216 and the second surface 217, the battery array 20 can meet the requirements of different batteries 10 and improve the applicability of the battery 10.

It should be noted that, based on the structures of the first surface 216 and the second surface 217, the two surfaces can combine with other surfaces of the battery cell 21 to form various forms of battery cell 21, such as a cubic casing battery cell, a blade-shaped battery cell and an one-stop battery cell.

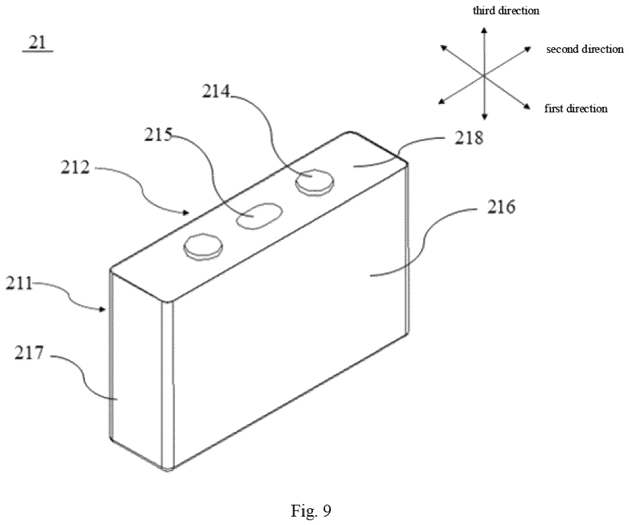

In some embodiments of the present application, as shown in Fig. 8 and Fig. 9, the battery cell 21 includes a plurality of surfaces, which include a first surface 216 and a second surface 217; the first surface 216 is a surface with the largest area, and an area of the second surface 217 is smaller than that of the first surface 216; the second surface 217 is arranged in the first direction and intersects with a horizontal plane, and the first surface 216 is arranged in the second direction and intersects with the horizontal plane; the first surfaces 216 of two adjacent battery cells 21 in each column of the battery cells 21 are arranged opposite to each other in the first direction, and the second surfaces 217 of two adjacent battery cells 21 in each row are arranged opposite to each other in the second direction.

Specifically, the first surface 216 is the surface of the battery cell 21 with the largest area, and the first surface 216 is arranged in the second direction and intersects with a horizontal plane. A thermal conductive member 40 can be arranged on a side of the first surface 216. By utilizing the thermal connection between the thermal conductive member 40 and the first surface 216, the contact area between the thermal conductive member 40 and the battery cell 21 can increase, so as to improve the heat dissipation efficiency of the battery cell 21. In addition, the first surface 216 is the surface with the largest area of the battery cell 21. The first surface 216 is arranged in the second direction and intersects with the horizontal plane. A corresponding reinforcement structure (such as a reinforcement beam or a reinforcement rib) can be arranged on a side of the housing 30 corresponding to the first surface 216, so as to improve the protective performance to the battery cell 21.

The first surface 216 is the surface of the battery cell 21 with the largest area, and the area of the second surface 217 is smaller than that of the first surface 216. By arranging the direction of the first surface 216 and the second surface 217, the battery array 20 can meet the requirements of different batteries 10 and improve the applicability of the battery 10.

It should be noted that, based on the structures of the first surface 216 and the second surface 217, the two surfaces can combine with other surfaces of the battery cell 21 to form various forms of battery cell 21, such as a cubic casing battery cell, a blade-shaped battery cell and an one-stop battery cell.

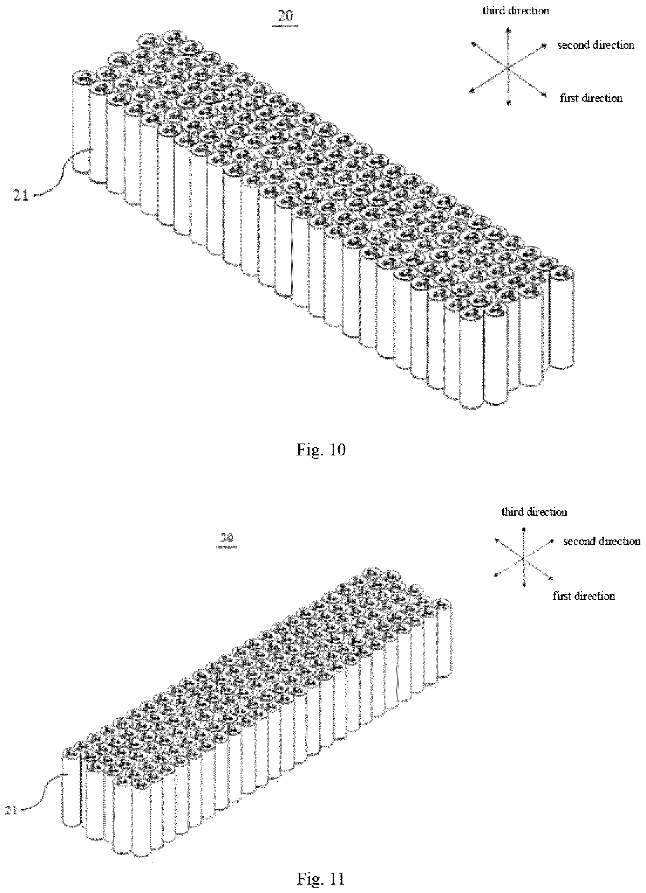

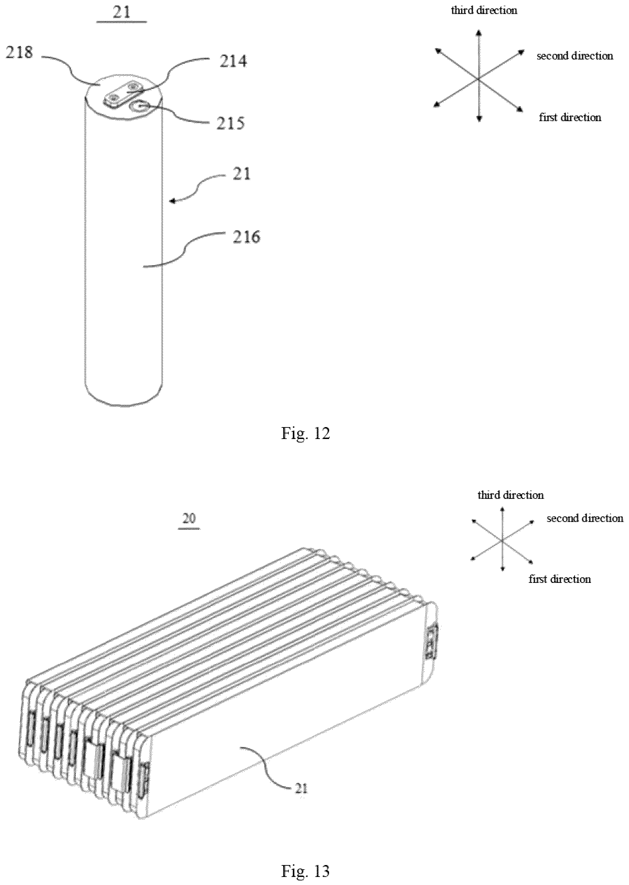

In some embodiments of the present application, as shown in Fig. 10 and Fig. 12, the battery cell 21 includes a plurality of surfaces, which include a first surface 216 with the largest area; the first surfaces 216 of two adjacent battery cells 21 in each column of the battery cells 21 are arranged opposite to each other in the first direction, and the first surfaces 216 of two adjacent battery cells 21 in each row are misaligned with each other in the second direction.

Specifically, the first surface 216 is the surface of the battery cell 21 with the largest area. By arranging the first surfaces 216 of two adjacent battery cells 21 in each row and the first surfaces 216 of two adjacent battery cells21 in each column, the battery array 20 can meet the requirements of different batteries 10 and improve the applicability of the battery 10.

In this embodiment, it should be understood that, based on the structure of the first surface 216, the first surface can combine with other surfaces of the battery cell 21 to form a cylindrical battery cell 21, such as a cubic casing battery cell, a blade-shaped battery cell and an one-stop battery cell.

In some embodiments of the present application, as shown in Fig. 11 and Fig. 12, the battery cell 21 includes a plurality of surfaces, which include a first surface 216 with the largest area; the first surfaces 216 of two adjacent battery cells 21 in each column of the battery cells 21 are misaligned with each other in the first direction, and the first surfaces 216 of two adjacent battery cells 21 in each row are arranged opposite to each other in the second direction.

Specifically, the first surface 216 is the surface of the battery cell 21 with the largest area. By arranging the first surfaces 216 of two adjacent battery cells 21 in each row and the first surfaces of two adjacent battery cells 21 in each column, the battery array 20 can meet the requirements of different batteries 10 and improve the applicability of the battery 10.

In this embodiment, it should be understood that, based on the structure of the first surface 216, the first surface can combine with other surfaces of the battery cell 21 to form a cylindrical battery cell 21, such as a cubic casing battery cell, a blade-shaped battery cell and an one-stop battery cell.

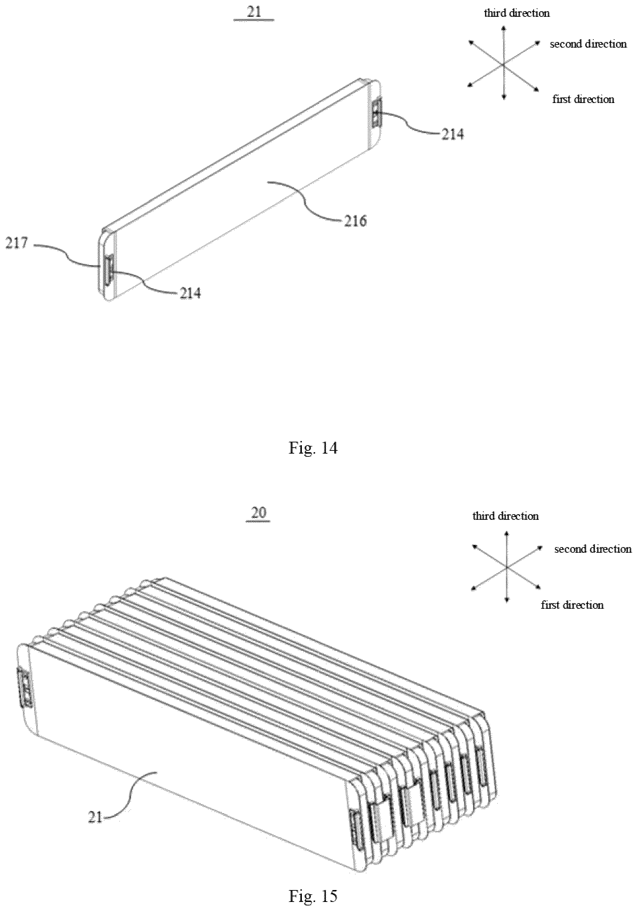

In some embodiments of the present application, as shown in Fig. 15 and Fig. 29 to Fig. 30, the separating part includes a thermal conductive member 40, which is arranged in the first direction and intersects with the second direction, the thermal conductive member 40 is arranged on at least one side of each column of the battery cells 21, and each column of the battery cells 21 are thermally connected to one thermal conductive member 40.

Specifically, by arranging the thermal conductive member 40, the thermal conductive member 40 is arranged in the housing 30 of the battery 10 and arranged in the first direction. The thermal conductive member 40 is arranged on at least one side of each column of the battery cells 21, so as to achieve the effective heat dissipation for the battery cells 21 in each column, maintain the battery cells 21 within a relatively safe operating temperature range and improve the using safety of the battery 10.

It should be noted that the surface of the battery cell 21 thermally connected to the thermal conductive member 40 may be the surface with of the battery cell 21 with the largest area. In this case, the contact area between the thermal conductive member 40 and the battery cell 21 can increase, so as to improve the heat dissipation performance of the battery cell 21. The contact area between the thermal conductive member 40 and the battery cell 21 may be not the largest surface area, so as to meet the requirements of different mounting and arrangement inside battery cell 21.

In addition, the thermal conductive member 40 can be arranged on one side of each column of the battery cell 21, or the thermal conductive members 40 can be arranged on two side of each column of the battery cell, respectively, so as to meet the heat dissipation requirements of the battery 10.

In some embodiments of the present application, the thermal conductive member 40 may be an electronic cooling sheet, such as a PTC.

In some embodiments of the present application, a channel is provided inside the thermal conductive member 40 to accommodate a heat-exchanging medium.

Specifically, the thermal conductive member 40 communicates with a medium circulation device, and the channel is filled with the heat-exchange medium (such as water or oil), which can circulate in the channel. The battery cells 21 transfer the heat to the heat-exchanging medium in the channel through the thermal conductive member 40. The heat-exchanging medium flows in the channel and carries out the heat exchanged with the battery cell 21. This heat exchange method has the high heat exchanging efficiency and the structure is simple.

In some embodiments of the present application, as shown in Fig. 27 and Fig. 28, the battery 10 further includes at least one current collector 50, which fluidly communicates with the thermal conductive member 40. The current collector 50 is located at one end of the thermal conductive member 40 in the first direction, or the current collectors 50 are located at two ends of the thermal conductive member 40 in the first direction, respectively.

Specifically, the current collector 50 is arranged at one end of the thermal conductive member 40 in the first direction, or the current collectors 50 are arranged at two ends of the thermal conductive member 40 in the first direction, respectively. By arranging the current collector 50, it can achieve the collection of the heat-exchanging medium inside the thermal conductive member 40, reduce the number of the parts, and thus improve the space utilization efficiency inside the housing 30.

In addition, when the battery 10 is subjected to the compression or impact in the second direction, the arranging position of the current collector 50 can avoid the compression or impact, so as to reduce the possibility of damage to the current collector 50, so that the heat-exchange medium can fully dissipate the heat from the battery 10, and further reduce the safety hazards caused by the high temperature of the battery 10.

In some embodiments of the present application, the battery includes two current collectors 50, which are located at one end of the thermal conductive member 40 in the first direction and arranged in a third direction. Any two of the first direction, the second direction and the third direction intersect with each other.

Specifically, by arranging two current collectors 50, the current collecting performance of the heat-exchanging medium can be improved, so that the heat-exchanging medium can have a good flow rate, which can further improve the heat exchanging ability of the heat-exchanging medium to the battery cells 21.

In addition, by arranging the two current collectors 50 at one end in the first direction together and arranging the two current collectors 50 in the third direction, the space occupied by the current collectors 50 in the battery 10 in the first direction can be effectively reduced, thereby facilitating arranging other structures inside the battery 10.

In some embodiments of the present application, the separating part includes a thermal conductive member 40, which is arranged in the second direction and intersects with the first direction. The thermal conductive member 40 is arranged on at least one side of each row of the battery cells 21, and each row of the battery cells 21 are thermally connected to one thermal conductive member 40.

Specifically, by arranging the thermal conductive member 40, the thermal conductive member 40 is arranged in the housing 30 of the battery 10 and arranged in the second direction. The thermal conductive member 40 is arranged on at least one side of each column of the battery cells 21, so as to achieve the effective heat dissipation for the battery cells 21 in each column, maintain the battery cells 21 within a relatively safe operating temperature range and improve the using safety of the battery 10.

It should be noted that the surface of the battery cell 21 thermally connected to the thermal conductive member 40 may be the surface with of the battery cell 21 with the largest area. In this case, the contact area between the thermal conductive member 40 and the battery cell 21 can increase, so as to improve the heat dissipation performance of the battery cell 21. The contact area between the thermal conductive member 40 and the battery cell 21 may be not the largest surface area, so as to meet the different requirements of mounting and arrangement inside battery cell 21.

In addition, the thermal conductive member 40 can be arranged on one side of each column of the battery cell 21, or the thermal conductive members 40 can be arranged on two side of each column of the battery cell, respectively, so as to meet the heat dissipation requirements of the battery 10.

In this embodiment, it should be noted that the thermal conductive member 40 may be an electronic cooling sheet (such as a PTC), and the thermal conductive member 40 can be provided with the channel for accommodating the heat-exchanging medium.

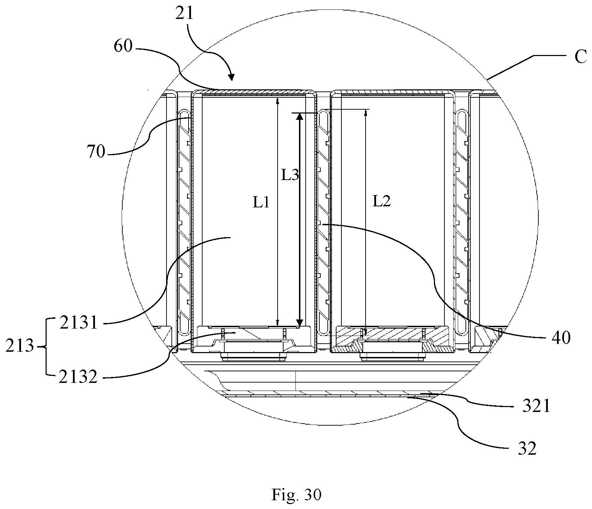

In some embodiments of the present application, as shown in Fig. 30, the battery cell 21 includes an electrode assembly 213, which includes a main body 2131 and an electrode tab 2132 protruding from the main body 2131, the electrode tab 2132 is electrically connected to the electrode terminal 214, and a projection of the thermal conductive member 40 and a projection of the main body 2131 at least partially overlap with each other to form an overlapping region in the second direction.

Specifically, during using the battery cell 21, the heating of the battery cell 21 is mainly concentrated on the main body 2131 of electrode assembly 213. By arranging an overlapping region between the thermal conductive member 40 with the main body 2131, the thermal conductive member 40 can effectively exchange the heat of the main body 2131, so that he battery cell 21 can be maintained at a safe temperature, thereby improving the using safety.

Referring to Fig. 29 and Fig. 30, in some embodiments of the present application, in the third direction, a size of the main body 2131 is L1, a size of the thermal conductive member 40 is L2, any two of the first direction, the second direction and the third direction intersect with each other, and 0.5≤L2/L1≤1.5.

In this embodiment, by setting the value L2/L1 within the range of [0.5, 1.5], the space occupied by the thermal conductive member 40 in the third direction can be reduced, and the space utilization efficiency of the battery 10 can be further improved.

It should be understood that when L2/L1 is less than 0.5, the size of the thermal conductive member 40 is too small to effectively exchange heat for the battery cell 21. When L2/L1 is larger than 1.5, the size of thermal conductive member 40 is relatively large, which is prone to occupying the space of battery 10 and not conducive to improving the space utilization efficiency of the battery 10.

It should be noted that in this embodiment, the value of L2/L1 may be 0.5, 0.6, 0.7, 0.8, 0.9, 1.0, 1.1, 1.2, 1.3, 1.4... 1.5.

In some embodiments of the present application, in the third direction, a size of the overlapping region is L3, and 0.5≤L3/L1≤1.

In this embodiment, by setting the size of the overlapping region in the third direction, the heat exchanging area between the thermal conductive member 40 and the main body 2131 can be reasonably set, thereby greatly improving the heat exchanging effect of the thermal conductive member 40 on the main body 2131.

It should be understood that when L3/L1 is less than 0.5, the overlapping area between the thermal conductive member 40 and the main body 2131 is too small, the heat-exchanging effect of the thermal conductive member 40 for the battery cell 21 become worse, and the heat dissipation of the battery cell 21 cannot be effectively ensure.

It should be noted that in this embodiment, the value of L3/L1 may be 0.5, 0.6, 0.7, 0.8, 0.9... 1.

In some embodiments of the present application, the battery cell 21 includes an electrode terminal 214, which is arranged on at least one of the plurality of surfaces.

Specifically, by arranging the electrode terminal 214, the electrode terminal of the battery 10 can achieve the electrical discharge of the battery cells 21, thereby ensuring that the battery cells 21 can effectively perform the charging and discharging operations.

It should be understood that the battery cell 21 has the plurality of surfaces, and the electrode terminal 214 can be arranged on the corresponding surface of the battery cell 21 according to the requirements.

In some embodiments of the present application, as shown in Fig. 7, Fig. 9 and Fig. 12, the plurality of surfaces further include at least one third surface 218. Any two of the first surface 216, the second surface 217 and the third surface 218 intersect with each other, and the electrode terminal 214 is arranged on the third surface 218.

Specifically, the battery cell 21 includes the plurality of surfaces including the first surface 216 with the largest area, the second surface 217 and the third surface 218, in which the area of either the second surface 217 or the third surface 218 is smaller than that of the first surface 216. By arranging the position of the electrode terminal 214, the structure of the battery cell 21 can meet the mounting requirements of different batteries 10, thereby improving the applicability of the battery cell 21.

It should be understood that the electrode terminal 214 is arranged on the third surface 218, so that the first surface 216 can be thermally connected to the thermal conductive member 40, so as to prevent the interference between the electrode terminal 214 and the thermal conductive member 40, ensure the effective thermal conductivity between the thermal conductive member 40 and the battery cell 21, and improve the heat dissipation effect of the thermal conductive member 40 on the battery cell 21.

In some embodiments of the present application, the plurality of surfaces further include two third surfaces 218, the two third surfaces 218 are arranged opposite to each other and intersect with the first surface 216, the battery cell 21 includes two electrode terminals 214 with opposite polarities. As shown in Fig. 7 and Fig. 9, the two electrode terminals 214 with the opposite polarities are both arranged on one of the two third surfaces 218, or the two electrode terminals 214 with the opposite polarities are arranged on the two third surfaces 218, respectively.

Specifically, as shown in Fig. 7, Fig. 9, Fig. 18, Fig. 20, the battery cell 21 includes the plurality of surfaces including the first surface 216, the second surface 217 and the third surface 218. The first surface 216 has the largest area, and the area of either the second surface 217 or the third surface 218 is smaller than that of the first surface 216.

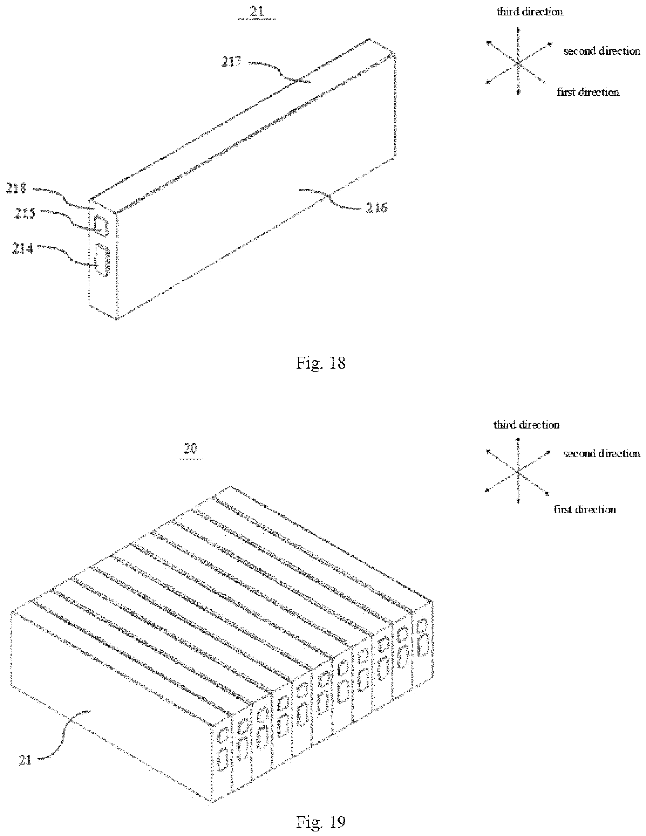

As shown in Fig. 7 or Fig. 18, when the first surface 216 is arranged in the first direction and intersects with the horizontal plane, and the two third surfaces 218 are arranged opposite to each other in the first direction, two electrode terminals 214 with the opposite polarities can be both arranged on one of the two third surfaces 218, or the two electrode terminals 214 with the opposite polarity can be arranged on the two third surfaces 218, respectively.

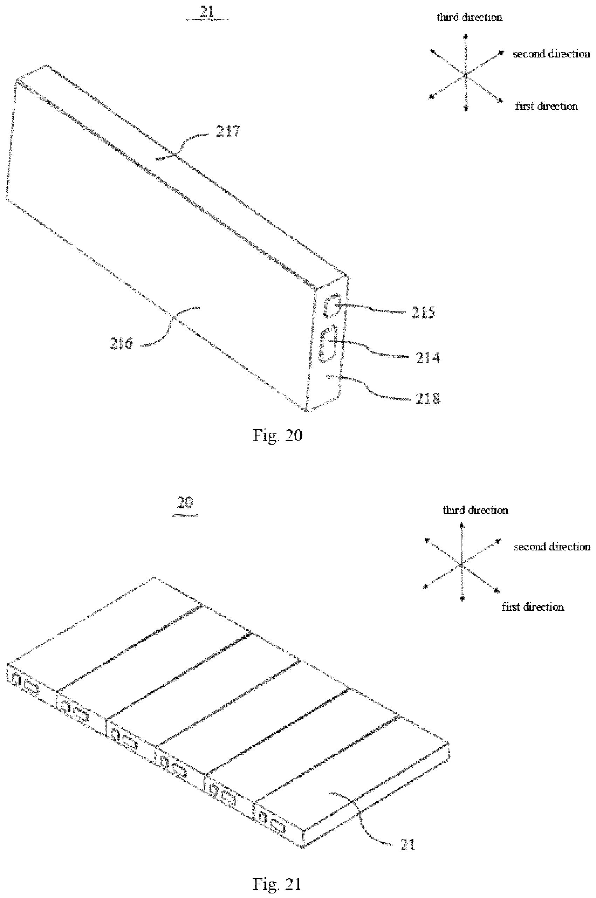

As shown in Fig. 9 or Fig. 20, when the first surface 216 is arranged in the second direction and intersects with the horizontal plane, and the two third surfaces 218 are arranged opposite to each other in the second direction, two electrode terminals 214 with the opposite polarities can be both arranged on one of the two third surfaces 218, or the two electrode terminals 214 with the opposite polarity can be arranged on the two third surfaces 218, respectively.

By arranging the position of the electrode terminal 214, the structure of the battery cell 21 can meet the mounting requirements of different batteries 10, thereby improving the applicability of the battery cell 21.

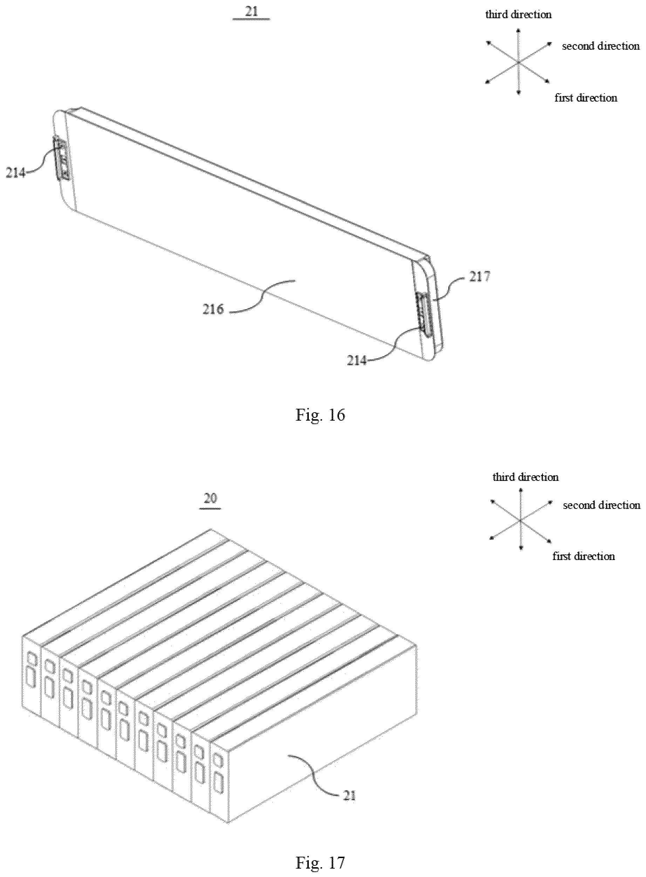

In some embodiments of the present application, the battery cell 21 includes the first surface 216 and a fourth surface arranged opposite to the first surface 216, the first surface 216 and the fourth surface are arranged opposite to each other in the first direction (as shown in Fig. 14) or the second direction (as shown in Fig. 16). Any two of the second direction, the first direction and the third direction intersect with each other. A concave part is arranged at an edge of the fourth surface. The first surface 216 is configured to arrange the electrode terminal 214, which protrudes from the first surface in the second direction and corresponds to the concave part.

Specifically, the battery cell 21 includes the plurality of surfaces, including the first surface 216 with the largest area, and further including the fourth surface. The first surface 216 and the fourth surface are arranged opposite to each other in the first direction or the second direction. In two adjacent battery cells 21 of the battery array 20, the electrode terminal 214 of one battery cell 21 corresponds to the concave part of the other battery cell 21. The combination structure formed by the two adjacent battery cells 21 can be more compact by using a concave structure and a convex structure matching with each other, so that the structure of battery array 20 can be more compact, which can be conducive to improving the space utilization efficiency and the energy density of the battery 10.

In addition, by arranging the position of the electrode terminal 214, the structure of the battery cell 21 can meet the mounting requirements of different batteries 10, thereby improving the applicability of the battery cell 21.

In some embodiments of the present application, as shown in Fig. 21 to Fig. 24, the plurality of surfaces further include a third surface 218. Any two of the first surface 216, the second surface 217 and the third surface 218 intersect with each other. The third surface 218 has the largest area, and the area of either the first surface 216 or the second surface 217 is smaller than that of the third surface 218.

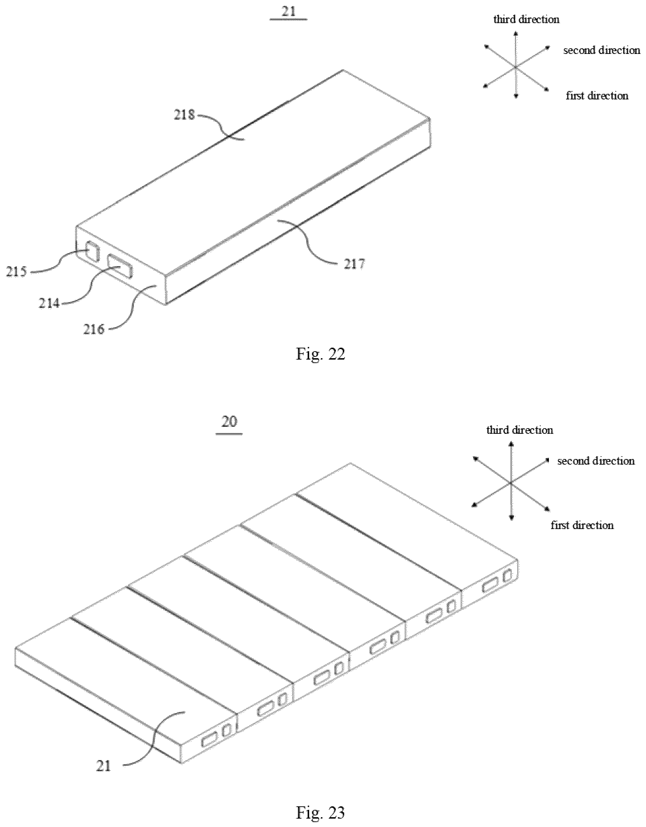

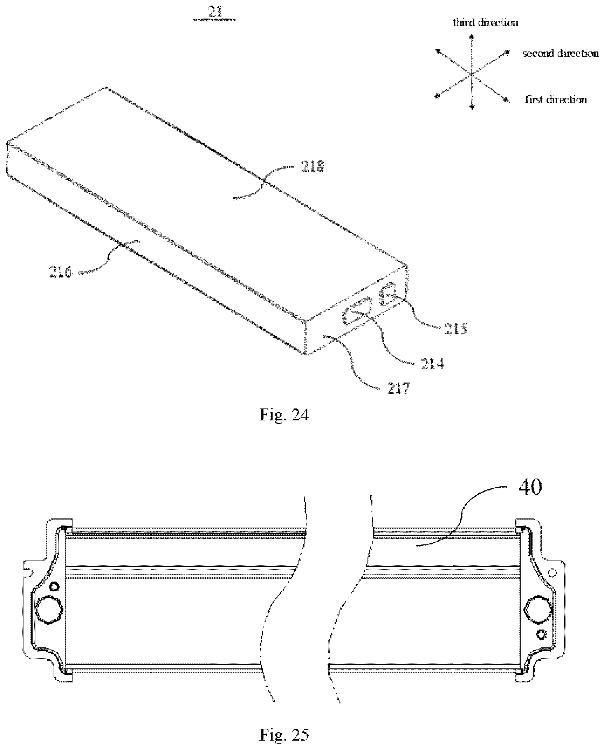

Specifically, as shown in Fig. 24, the first surface 216 is arranged in the first direction and intersects with the horizontal plane, and the second surface 217 is arranged in the second direction and intersects with the horizontal plane. Alternatively, as shown in Fig. 22, the first surface 216 is arranged in the second direction and intersects with the horizontal plane, and the second surface 217 is arranged in the first direction and intersects with the horizontal plane. The electrode terminal 214 can be arranged on the first surface 216 or the second surface 217. By arranging the position of the electrode terminal 214, the structure of the battery cell 21 can meet the mounting requirements of different batteries 10, thereby improving the applicability of the battery cell 21.

In some embodiments of the present application, the battery cell 21 includes two electrode terminals 214 with opposite polarities. As shown in Fig. 7 and Fig. 9, the two electrode terminals 214 are both arranged on the third surface 218. Alternatively, as shown in Fig. 12, one of the two electrode terminals 214 with opposite polarities is arranged on the third surface 218, and a casing 211 of the battery cell 21 forms the other one of the two electrode terminals 214.

Specifically, the battery cell 21 includes the plurality of surfaces including the first surface 216 with the largest area, the second surface 217 and the third surface 218, in which the area of either the second surface 217 or the third surface 218 is smaller than that of the first surface 216. By arranging the position of the electrode terminal 214, the structure of the battery cell 21 can meet the mounting requirements of different batteries 10, thereby improving the applicability of the battery cell 21.

In some embodiments of the present application, as shown in Fig. 6, the battery cells 21 in each column include at least two battery cells 21, which are arranged in the first direction.

Specifically, at least two battery cells 21 are arranged in the first direction, so as to facilitate the arrangement of the battery cells 21 inside the housing 30.

It should be noted that when at least two battery cells 21 are arranged in the first direction, the large surfaces (the surface with the largest area) of the battery cells 21 can be arranged in the first direction and intersect with the horizontal plane, or arranged in the second direction and intersect with the horizontal plane.

In some embodiments of the present application, in the first direction, a maximum size of the battery cell 21 is L; in the second direction, a maximum size of the battery cell 21 is D; and a value of L/D ranges from 1 to 30.

Specifically, as shown in Fig. 7, the maximum size of the battery cell 21 in the first direction is L, and the maximum size of the battery cell 21 in the second direction is D. By setting the sizes of the battery cell 21 in the first direction and the second direction, the energy density of battery cell 21 can be improved as much as possible, while the support strength of battery cell 21 can be ensured.

It should be understood that when the size ratio of L/D is larger than 30, it will cause the size of the battery cell 21 in the first direction to be too large, which may lead to the inconvenient mounting and reduce the support strength of the battery cell 21. When the size ratio of L/D is less than 1, it will cause the size of battery cell 21 in the first direction to be too small, which may reduce the electric power of battery cell 21.

It should be noted that the values of LID may be 1, 2, 3, 4, 5, 6, 7, 8... 30. By setting different values of L/D, the battery cell 21 can have different shapes, thereby meeting the requirements of different forms of batteries 10.

In some embodiments of the present application, in the third direction, a maximum size of the battery cell 21 is H; a value of L/H ranges from 0.5 to 6; and any two of the first direction, the second direction and the third direction intersect with each other.

Specifically, as shown in Fig. 7, in the first direction, the maximum size of the battery cell 21 is L. The maximum size of the battery cell 21 in the first direction is L, and a maximum size of the battery cell 21 in the third direction is H. The size of the battery cell 21 is set according to the above-mentioned ratio, so that the electric power of battery cell 21 can increase as much as possible while the support strength of the battery cell 21 can be ensured.

It should be noted that the values of L/H may be 0.5, 1, 1.5, 2, 2.5, 3, 3.5, 4... 6. By setting different values of L/H, the battery cell 21 can have different shapes, thereby meeting the requirements of different forms of batteries 10.

In some embodiments of the present application, as shown in Fig. 29 and Fig. 32, the battery 10 further includes a housing 30. The housing 30 includes two inner walls, which are arranged opposite to each other in the second direction. A maximum distance between the two inner walls is D2, N*D=n*D2, and nG[0.7, 0.99].

Specifically, by setting the ratio between N*D and D2, the battery array 20 can be more suitable for the housing 30 of the battery 10, and can effectively improve the space utilization efficiency of the battery 10 while meeting the mounting requirements of the battery array 20, so that the energy density of the battery 10 can be effectively increased.

It should be understood that when the value of n is less than 0.7, the space utilization efficiency and the energy density of the battery 10 will be reduced; when the value of n is larger than 0.99, it cannot be ensured that the battery array 20 can be effectively mounted inside the housing 30. Therefore, by setting the value of n within the range of [0.7, 0.99], the requirement of mounting of the battery array can be effectively met, the space utilization efficiency of the battery can be improved, and the energy density of the battery can be improved.

It should be noted that the values of n may be 0.7, 0.75, 0.8, 0.85, 0.9, 0.95... 0.99. By setting different values of n, the space utilization inside the housing 30 can be improved, so that the space utilization efficiency and energy density of battery 10 can be improved.

In some embodiments of the present application, the battery cells 21 are fixedly connected to the housing 30 through a first adhesive layer 60, the battery 10 further includes a thermal conductive member 40, which is thermally connected to the battery cells 21 through a second adhesive layer 70, and a thermal conductive coefficient of the first adhesive layer 60 is less than or equal to that of the second adhesive layer 70.

Specifically, since the first adhesive layer 60 is used to fixedly connected the battery cells 21 with the housing 30, and the second adhesive layer 70 is used to thermally connected the battery cells 21 with the thermal conductive member 40, the thermal conductive coefficient of the first adhesive layer 60 is set to be less than or equal to that of the second adhesive layer 70, so as to ensure more effective heat dissipation for the battery cells 21 through the thermal conductive member 40.

In some embodiments of the present application, a ratio of the thermal conductive coefficient of the first adhesive layer 60 to the thermal conductive coefficient of the second adhesive layer 70 ranges from 0.1 to 1.

Specifically, by setting the range of the above ratio, the battery cells 21 can effectively dissipate heat through the thermal conductive member 40.

It should be understood that when the ratio of the thermal conductive coefficient of the first adhesive layer 60 to the thermal conductive coefficient of the second adhesive layer 70 is less than 0.1, the thermal conductivity of the first adhesive layer 60 is poor, and a side of the battery cell 21 connected to the first adhesive layer 60 cannot exchange heat through a side of the first adhesive layer 60. In this case, the heat exchanging only through one side of the second adhesive layer 70 cannot ensure the good heat dissipation effect on the battery cell 21. When the ratio of the thermal conductive coefficient of the first adhesive layer 60 to the thermal conductive coefficient of the second adhesive layer 70 is less than 0.1, the thermal conductivity of the first adhesive layer 60 is stronger than that of the second adhesive layer 70. The ability of the battery cell 21 to dissipate heat through the thermal conductive member 40 is weakened, which will lead to the deterioration in the heat dissipation effect of the battery cell 21.

It should be noted that the ratio of the thermal conductive coefficient of the first adhesive layer 60 to the thermal conductive coefficient of the second adhesive layer 70 may be 0.1, 0.2, 0.3, 0.4, 0.5, 0.6, 0.7, 0.8, 0.9... 1.

In addition, in this embodiment, the first adhesive layer 60 and the second adhesive layer 70 can be the same type of adhesive, but the thermal conductive coefficients of the first adhesive layer and the second adhesive layer may be different. That is, the thermal conductive coefficient of the first adhesive layer 60 is smaller than that of the second adhesive layer 70. For example, the first adhesive layer 60 and the second adhesive layer 70 can adopt thermal conductive polyurethane adhesive layers, respectively, and different amounts of thermal conductive particles can be added to the thermal conductive polyurethane adhesive layers, respectively, to achieve different thermal conductive coefficients.

In addition, the first adhesive layer 60 and the second adhesive layer 70 can adopt two different types of adhesives, respectively. For example, the first adhesive layer 60 may be a structural adhesive, a foam-filling adhesive, a pressure-sensitive adhesive, a sealing adhesive or the like, and the second adhesive layer 70 may be a thermal conductive adhesive or the like.

In some embodiments of the present application, the battery cell 21 includes an electrode assembly 213, which is in a winding structure and in a shape of a flat, an outer surface of the electrode assembly 213 includes two flat planes, which face to each other in the second direction; or the electrode assembly 213 is in a stacked structure and includes a first electrode plate, a separator and a second electrode plate, which are stacked in the second direction.

The electrode assembly 213 is a component in the battery cell 21 that produces an electrochemical reaction. One or more electrode assemblies 213 are arranged inside the battery cell 21. The electrode assembly 213 is substantially formed by winding or stacking electrode plates (a positive electrode plate and a negative electrode plate), and a separator is generally arranged between the positive electrode plate (first electrode plate) and the negative electrode plate (second electrode plate). The main body 2131 of the electrode assembly 213 is formed by portions of the electrode plates (first electrode plate and second electrode plate) that include the active substance, and other portions of the positive electrode plate and the negative electrode plate that do not include the active substance form electrode tabs 2132, respectively. The positive electrode tab and the negative electrode tab can be located at one end of the main body 2131 or at two ends of the main body 2131, respectively.

Specifically, the electrode assembly 213 is in the winding structure and in the shape of the flat, the outer surface of the electrode assembly 213 includes two flat planes, which face to each other in the second direction, or the electrode assembly 213 is in the stacked structure, so that the space occupied by the electrode assembly 213 in the second direction can be reduced, so as to facilitate the arrangement and mounting of other parts in the first direction by the battery 10.

In some embodiments of the present application, the battery cell 21 further includes a press-releasing mechanism 215, which is arranged on any one of the surfaces of the battery cell.

Specifically, when the battery cell 21 occurs the thermal runaway, the pressure inside the battery cell 21 can be released through the press-releasing mechanism 215 in time to avoid the safety risk such as explosion of the battery cell 21.

It should be understood that the press-releasing mechanism 215 can be arranged on the first surface 216, the second surface 217, the third surface 218 or another surface of the battery cell 21.

In some embodiments of the present application, the press-releasing mechanism 215 and the electrode terminal 214 can be arranged on the first surface 216, the second surface 217 or the third surface 218.

Specifically, as shown in Fig. 6 to Fig. 12, both the press-releasing mechanism 215 and the electrode terminal 214 are arranged on the first surface 216. By arranging the press-releasing mechanism 215 on the first surface 216, it is convenient for the synchronous mountings of the press-releasing mechanism 215 and the electrode terminal 214, so as to improve the assembly convenience and improve the production efficiency.

In addition, when the press-releasing mechanism 215 is arranged on the second surface 217, the second surface 217 is connected to the housing 30, thereby utilizing the housing 30 to form the protection on an outer side of the press-releasing mechanism 215, and reducing the possibility of the press-releasing mechanism 215 being impacted.

In addition, the arranging position of the press-releasing mechanism 215 can meet the requirements of different types of the battery cells 21, thereby further improving the safety performance of the battery 10.

In a second aspect, the present application provides an electric-consuming device 1, including the battery 10 as described above, which is configured to provide electrical energy to drive the electric-consuming device 1 to move.

In some embodiments of the present application, in a case that the length direction of the battery 10 is different from the travelling direction of the electric-consuming device 1, the first direction is the travelling direction of the electric-consuming device 1.

Specifically, the first direction is set as the travelling direction of the electric-consuming device 1, and the third direction intersects with the first direction and the horizontal direction. The battery cell 21 located inside the housing 30 of the battery 10 includes the first surface 216 and the second surface 217. The first surface 216 is provided with the electrode terminal 214, and the second surface 217 is connected to the housing 30. By setting the first direction, it can facilitate the mounting and arrangement of the battery 10 on the electric-consuming device 1. By adjusting the arrangement of the battery cells 21 inside the housing 30, it can meet the using requirements of different electric-consuming devices 1.

The above description is only an overview of the technical solution of the present application. In order to have a clearer understanding of the technical means of the present application, it can be implemented according to the content of the description. In order to make the above and other objects, features, and advantages of the present application more obvious and easy to be understood, the specific embodiments of the present application are listed below.

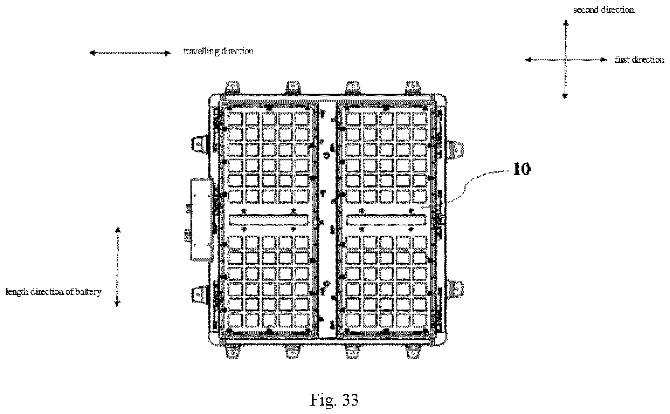

In the embodiments of the present application, as shown in Fig. 1 to Fig. 33, the present application provides the battery 10 including the battery array 20 formed by M*N battery cell(s) 21 arranged in M rows and N columns, M≥1, N≥1, and both M and N being positive integers. The battery cell(s) 21 in each row of the battery array 20 is(are) arranged in the first direction, which is the length direction of the battery 10 or the travelling direction of the electric-consuming device 1 including the battery 10, and the battery cell(s) 21 in each column of the battery array 20 is(are) arranged in the second direction, which intersects with the first direction and the vertical plane. The maximum size of the battery cell 21 in the second direction is D, the maximum size of the battery array 20 in the second direction is D1, and N*D/D1∈[0.70, 0.99].

Specifically, all the battery cells 21 form the battery array 20. Each column of the battery array 20 is arranged in the first direction, and each row of the battery array 20 is arranged in the second direction. In the second direction, the maximum size of the battery cell 21 is D, and the maximum size of the battery array 20 is D1. The value of N*D/D1 ranges within [0.70, 0.99], so that the structure of the battery array 20 formed by all the battery cells 21 can be more compact. When the battery array 20 is arranged inside the battery 10, the occupied internal space of the battery 10 can be reduced, the space utilization efficiency of the battery 10 can be improved, and the energy density of the battery 10 can be improved.

Further, in the present application, the value of N*D/D1 is further set within the range of [0.83, 0.99].

Further, the battery 10 further includes the housing 30. The housing 30 includes two inner walls, which are arranged opposite to each other in the second direction. The maximum distance between the two inner walls is D2, and N*D=n*D2, and nG[0.7, 0.99].

Further, in battery array 20, the two adjacent battery cells 21 can be bonded and fixed by the adhesive.

Further, the separating part can be set between two adjacent battery cells 21 in each column, or between two adjacent battery cells 21 in each row. The separating part is bonded and fixed to the battery cells 21.

Further, the separating part includes at least one of the thermal conductive member 40, a buffer member, a separating plate or a separating beam. In the present application, the separating part includes the thermal conductive member 40.

Specifically, the separating part includes the thermal conductive member 40, which is arranged in the housing 30 of the battery 10 and arranged in the first direction. The thermal conductive member 40 is thermally connected to the battery cell 21. The surface of the battery cell 21 for the thermal conductive connection between the battery cell 21 and the thermal conductive member 40 may be the surface of the battery cell 21 with the largest area. The heat-exchanging medium channel is arranged inside the thermal conductive member 40, and the heat-exchanging medium flows in the heat-exchanging medium channel. The heat transfer occurs between the thermal conductive member 40 and the battery cell 21 through the channel.

The other parts of the separating part are bonded and fixed to the battery cell 21 through the first adhesive layer, and the thermal conductive member 40 is bonded and fixed to the battery cell 21 through the second adhesive layer. The ratio of the thermal conductive coefficient of the first adhesive layer to the thermal conductive coefficient of the second adhesive layer ranges from 0.1 to 1.

Further, the battery cell 21 includes the plurality of surfaces including the first surface 216, the second surface 217 and the third surface 218. When the first surface 216 is the surface with the largest area, there are two first surfaces and the two first surfaces 216 are arranged opposite to each other in the second direction, in this case, the second surfaces 217 of the two adjacent battery cells 21 in each column of the battery cells 21 are arranged opposite to each other, and the first surfaces 216 of the two adjacent battery cells 21 in each row are arranged opposite to each other. When the first surface 216 is the surface with the largest area, there are two first surfaces and the two first surfaces 216 are arranged opposite to each other in the first direction, in this case, the first surfaces 216 of the adjacent two battery cells 21 in each column of the battery cells 21 are arranged opposite to each other, and the second surfaces 217 of the adjacent two battery cells 21 in each row are arranged opposite to each other. When the first surface 216 is the surface with the largest area and there is one first surface, the first surface 216 can form a peripheral surface of the battery cell 21. In this case, the two adjacent battery cells 21 in each column of the battery cells 21 are arranged in the first direction, and the two adjacent battery cells 21 in each row are misaligned with each other, or the two adjacent battery cells 21 in each row are arranged in the first direction, and the two adjacent battery cells 21 in each column are misaligned with each other.

In the first direction, the maximum size of battery cell 21 is L, and in the second direction, the maximum size of battery cell 21 is D. The value of LID ranges from 1 to 30. In the third direction, the maximum size of battery cell 21 is H, and the value of L/H ranges from 0.5 to 6.

Further, the battery cell 21 includes two electrode terminals 214 with the opposite polarities. The two electrode terminals 214 with the opposite polarities are arranged on the same surface of the battery cell 21 or on different surfaces of the battery cell 21, respectively. Alternatively, one electrode terminal is arranged the surface of the battery cell 21 and the other electrode terminal is formed by the casing 211 of the battery cell of the battery 10.

Further, the press-releasing mechanism 215 is arranged on the battery cell 21. The press-releasing mechanism 215 can be arranged on any one of the first surface 216, the second surface 217 and the third surface 218. In the structure shown in the drawings of the present application, both the press-releasing mechanism 215 and the electrode terminal 214 are arranged on the first surface 216.

Further, in the second direction, the projections of the thermal conductive member 40 and the main body 2131 at least partially overlap with each other to form the overlapping region.

Further, in the third direction, the size of the main body 2131 is L1, the size of the thermal conductive member 40 is L2, and 0.5≤L2/L1≤1.5.

Further, in the third direction, the size of the overlapping region is L3, and 0.5≤L3/L1≤1.

Further, the battery 10 further includes the current collector 50, which is located at the end of the thermal conductive member 40 in the first direction and communicates with the heat-exchanging medium channel of the thermal conductive member 40.

Finally, it should be noted that the above embodiments are only used to illustrate the technical solutions of the present application and do not to restrict them; although the present application has been described in detail with reference to the various embodiments as described above, those skilled in the art should understand that they can still modify the technical solutions recited in the embodiments as described above, or equivalently replace some or all of the technical features; these modifications or substitutions do not separate the essence of the corresponding technical solutions from the scope of the technical solutions of the various embodiments of the present application, and they should all be covered within the scope of the claims and description of the present application. Especially, as long as there is no structural conflict, the various technical features mentioned in each of the embodiments can be combined in any way. The present application is not restricted to the specific embodiments disclosed in the text, but includes all technical solutions falling within the scope of the claims.

## Claims

1. A battery, **characterized by** comprising a battery array formed by M*N battery cell(s) (21) arranged in M rows and N columns, M≥1, N≥1, and M and N being positive integers;
the battery cell(s) (21) in each column of the battery array being arranged in a first direction, which is a length direction of the battery or a travelling direction of an electric-consuming device comprising the battery, and the battery cell(s) (21) in each row of the battery array being arranged in a second direction, which intersects with the first direction and a vertical plane;
a maximum size of the battery cell (21) in the second direction being D, and a maximum size of the battery array in the second direction being D1, where N*D/D1 ∈ [0.70, 0.99].

2. The battery according to claim 1, wherein N*D/D1∈[0.83, 0.99].

3. The battery according to claim 1 or 2, wherein the length direction of the battery is parallel to or intersects with the travelling direction of the electric-consuming device.

4. The battery according to any one of claims 1 to 3, wherein in the battery array, M≥2, and in each row of the battery cells (21), an adhesive is provided between two adjacent battery cells (21); and/or
in the battery array, N≥2, and in each column of the battery cells (21), an adhesive is provided between two adjacent battery cells (21).

5. The battery according to any one of claims 1 to 3, wherein two adjacent battery cells are spaced apart from each other.

6. The battery according to any one of claims 1 to 3, wherein in the battery array, M≥2, and in each row of battery cells (21), a separating part is arranged between two adjacent battery cells (21); or
in the battery array, N≥2, and in each row of the battery cells (21), a separating part is arranged between two adjacent battery cells (21).

7. The battery according to claim 6, wherein the separating part is bonded and fixed to the battery cells.

8. The battery according to claim 6 or 7, wherein the separating part comprises at least one of a thermal conductive member (40), a buffer member, a separating plate or a separating beam.

9. The battery according to any one of claims 1 to 8, wherein the battery cell (21) comprises a plurality of surfaces, which comprise a first surface (216) and a second surface (217), wherein the first surface (216) is a surface with the largest area, and an area of the second surface (217) is smaller than the area of the first surface (216); the first surface (216) is arranged in the first direction and intersects with a horizontal plane, and the second surface (217) is arranged in the second direction and intersects with the horizontal plane; in the first direction, the second surfaces (217) of two adjacent battery cells (21) in each column of the battery cells (21) are arranged opposite to each other, and in the second direction, the first surfaces (216) of two adjacent battery cells (21) in each row of the battery cells (21) are arranged opposite to each other.

10. The battery according to any one of claims 1 to 8, wherein the battery cell (21) comprises a plurality of surfaces, which comprise a first surface (216) and a second surface (217), wherein the first surface (216) is a surface with the largest area, and an area of the second surface (217) is smaller than the area of the first surface (216); the second surface (217) is arranged in the first direction and intersects with a horizontal plane, and the first surface (216) is arranged in the second direction and intersects with the horizontal plane; the first surfaces (216) of two adjacent battery cells (21) in each column of the battery cells (21) are arranged opposite to each other in the first direction, and the second surfaces (217) of two adjacent battery cells (21) in each row of the battery cells (21) are arranged opposite to each other in the second direction.

11. The battery according to any one of claims 1 to 8, wherein the battery cell (21) comprises a plurality of surfaces, which comprise a first surface with the largest area (216); the first surfaces (216) of two adjacent battery cells (21) in each column of the battery cells (21) are arranged opposite to each other in the first direction, and the first surfaces (216) of two adjacent battery cells (21) in each row of the battery cells (21) are misaligned with each other in the second direction.

12. The battery according to any one of claims 1 to 8, wherein the battery cell (21) comprises a plurality of surfaces, which comprise a first surface with the largest area (216); the first surfaces (216) of two adjacent battery cells (21) in each column of the battery cells (21) are misaligned with each other in the first direction, and the first surfaces (216) of two adjacent battery cells (21) in each row are arranged opposite to each other in the second direction.

13. The battery according to any one of claims 6 to 12, wherein the separating part comprises a thermal conductive member (40) arranged in the first direction and intersecting with the second direction, the thermal conductive member (40) is arranged on at least one side of each column of the battery cells (21), and each column of the battery cells (21) are thermally connected to one thermal conductive member (40).

14. The battery according to claim 13, wherein a channel is provided inside the thermal conductive member (40) to accommodate a heat-exchanging medium.

15. The battery according to claim 14, further comprising a current collector (50) in fluid communication with the thermal conductive member (40),
wherein the current collector (50) is located at one end of the thermal conductive member (40) in the first direction, or current collectors (50) are located at both ends of the thermal conductive member (40) in the first direction, respectively.

16. The battery according to claim 15, comprising two current collectors (50) located at one end of the thermal conductive member (40) in the first direction and arranged in a third direction, wherein any two of the first direction, the second direction and the third direction intersect with each other.

17. The battery according to any one of claims 6 to 12, wherein the separating part comprises a thermal conductive member (40) arranged in the second direction and intersecting with the first direction, the thermal conductive member (40) is provided on at least one side of each row of the battery cells (21), and each row of the battery cells (21) are thermally connected to one thermal conductive member (40).

18. The battery according to any one of claims 13 to 17, wherein the battery cell (21) comprises an electrode assembly (213), the electrode assembly (213)comprises a main body (2131) and an electrode tab (2132) protruding from the main body (2131), the electrode tab (2132) is electrically connected to an electrode terminal (214), and a projection of the thermal conductive member (40) and a projection of the main body (2131) at least partially overlap with each other to form an overlapping region in the second direction.

19. The battery according to claim 18, wherein in the third direction, a size of the main body (2131) is L1, a size of the thermal conductive member (40) is L2, any two of the first direction, the second direction and the third direction intersect with one another, where 0.5≤L2/L1≤1.5.

20. The battery according to claim 19, wherein in the third direction, a size of the overlapping region is L3, where 0.5≤L3/L1≤1.

21. The battery according to any one of claims 9 to 20, wherein the battery cell (21) comprises an electrode terminal (214) arranged on at least one of the plurality of surfaces.

22. The battery according to claim 21, wherein the plurality of surfaces further comprise a third surface (218), any two of the first surface (216), the second surface (217) and the third surface (218) intersect with one another, and the electrode terminal (214) is arranged on the third surface (218).

23. The battery according to claim 22, wherein the plurality of surfaces comprise two third surfaces (218), the two third surfaces (218) are arranged opposite to each other and intersect with the first surface (216), the battery cell (21) comprises two electrode terminals (214) with opposite polarities, and the two electrode terminals (214) with the opposite polarities are arranged on one of the two third surfaces (218), or the two electrode terminals (214) with the opposite polarities are arranged on the two third surfaces (218), respectively.

24. The battery according to claim 22, wherein the battery cell (21) comprises two electrode terminals (214) with opposite polarities, wherein: the two electrode terminals (214) with the opposite polarities are both arranged on the third surface (218); or one of the two electrode terminals (214) with the opposite polarities is arranged on the third surface (218), and a casing (211) of the battery cell (21) forms the other one of the two electrode terminals (214) with opposite polarities.

25. The battery according to claim 21, wherein the battery cell (21) comprises the first surface (216) and a fourth surface arranged opposite to the first surface (216), the first surface (216) and the fourth surface are arranged opposite to each other in the first direction or the second direction, a concave part is arranged at an edge of the fourth surface, the first surface (216) is configured to arrange the electrode terminal (214), and the electrode terminal (214) protrudes from the first surface (216) in the second direction and corresponds to the concave part.

26. The battery according to any one of claims 1 to 25, wherein each column of the battery cells (21) comprise at least two battery cells (21) arranged in the first direction.

27. The battery according to any one of claims 1 to 26, wherein in the first direction, a maximum size of the battery cell (21) is L, where a value of LID ranges from 1 to 30.

28. The battery according to any one of claims 1 to 27, wherein in the first direction, a maximum size of the battery cell (21) is L, and in the third direction, a maximum size of the battery cell (21) is H, where a value of L/H ranges from 0.5 to 6, and any two of the first direction, the second direction and the third direction intersect with each other.

29. The battery according to any one of claims 1 to 28, further comprising a housing (30), wherein the housing (30) comprises two inner walls arranged opposite to each other in the second direction, and a maximum distance between the two inner walls is D2, where N*D=n*D2, nG[0.7, 0.99].

30. The battery according to claim 29, wherein the battery cells (21) are fixedly connected to the housing (30) through a first adhesive layer (60), the battery further comprises a thermal conductive member (40), which is thermally connected to the battery cells (21) through a second adhesive layer (70), and a thermal conductive coefficient of the first adhesive layer (60) is less than or equal to a thermal conductive coefficient of the second adhesive layer (70).

31. The battery according to claim 30, wherein a ratio of the thermal conductive coefficient of the first adhesive layer (60) to the thermal conductive coefficient of the second adhesive layer (70) ranges from 0.1 to 1.

32. The battery according to any one of claims 1 to 31, wherein the battery cell (21) comprises an electrode assembly (213), wherein: the electrode assembly (213) is in a winding structure with a flat shape, and an outer surface of the electrode assembly (213) comprises two flat planes facing each other in the second direction; or
the electrode assembly (213) is in a stacked structure and comprises a first electrode plate, a separator and a second electrode plate, which are stacked in the second direction.

33. An electric-consuming device, comprising the battery according to any one of claims 1 to 32, which is configured to provide electrical energy to drive the electric-consuming device to travel.

34. The electric-consuming device according to claim 33, wherein when the length direction of the battery is different from the travelling direction of the electric-consuming device, the first direction is the travelling direction of the electric-consuming device.
